(19) **Europäisches Patentamt / European Patent Office / Office européen des brevets**

(11) **EP 4 654 485 A1**

(12) **EUROPEAN PATENT APPLICATION**
published in accordance with Art. 153(4) EPC

(43) Date of publication:
26.11.2025 Bulletin 2025/48

(21) Application number: 24826286.7

(22) Date of filing: 20.06.2024

(51) International Patent Classification (IPC):
H04B 1/3827 (2015.01)    H04W 52/22 (2009.01)
H04W 52/28 (2009.01)    H04W 52/34 (2009.01)
H04W 88/06 (2009.01)

(52) Cooperative Patent Classification (CPC):
H04B 1/3827; H04W 52/22; H04W 52/28;
H04W 52/34; H04W 88/06

(86) International application number:
PCT/KR2024/008564

(87) International publication number:
WO 2024/262971 (26.12.2024 Gazette 2024/52)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 20.06.2023  KR 20230079158
20.11.2023  KR 20230160003

(71) Applicant: Samsung Electronics Co., Ltd.
Suwon-si, Gyeonggi-do 16677 (KR)

(72) Inventors:
• LEE, Youngkwon
Suwon-si Gyeonggi-do 16677 (KR)

• YU, Hyungjoon
Suwon-si Gyeonggi-do 16677 (KR)
• KANG, Myungjin
Suwon-si Gyeonggi-do 16677 (KR)
• PARK, Yongjun
Suwon-si Gyeonggi-do 16677 (KR)
• LEE, Jongphil
Suwon-si Gyeonggi-do 16677 (KR)
• JEONG, Myoungjoon
Suwon-si Gyeonggi-do 16677 (KR)

(74) Representative: Nederlandsch Octrooibureau
P.O. Box 29720
2502 LS The Hague (NL)

(54) **ELECTRONIC DEVICE FOR CONTROLLING TRANSMISSION POWER ON BASIS OF SAR, AND OPERATION METHOD THEREOF**

(57) According to one embodiment, a communication device comprises: a memory for storing one or more computer programs; a first communication circuit configured to perform first wireless communication based on a first communication protocol, with a first external device; a second communication circuit configured to perform second wireless communication, based on a second protocol different from the first protocol, with a second external device; and one or more application processors communicatively connected to the first communication circuit, the second communication circuit, and the memory, wherein the one or more computer programs store computer-executable instructions, and the instructions, when executed by the one or more application processors, causes the communication device to control the first communication circuit and the second communication circuit so that the sum of a first output power value output by the first communication circuit during a predetermined time range and a second output power value output by the second communication circuit during the predetermined time range does not exceed a preset total threshold value.

101

AP 510

TAS manager 701

511 RIL

513

515

Second processor 530

TAS module 703

First processor 520

TAS module 523

# FIG. 7A

**Description**

**[TECHNICAL FIELD]**

Various embodiments of the disclosure relate to an electronic device controlling transmission power based on SAR and a method for operating the same.

**BACKGROUND ART**

A user equipment (UE) may transmit electromagnetic waves to transmit/receive data to/from a base station. Electromagnetic waves radiated from the UE may harm the human body, and various domestic or foreign organizations attempt to restrict the harmful electromagnetic waves. For example, the specific absorption rate (SAR) is a value indicating how much electromagnetic radiation from a mobile communication terminal is absorbed by the human body. SAR uses the unit of KW/g (or mW/g), which may mean the amount of power (KW, W or mW) absorbed per 1g of the human body. As the issue of harmfulness of electromagnetic waves attracts attention, SAR limit standards for mobile communication terminals have been established.

**[DISCLOSURE OF INVENTION]**

[Technical Solution]

In accordance with an aspect of the disclosure, a communication device is provided. The communication device includes first communication circuitry configured to perform first wireless communication with a first external device based on a first communication protocol, second communication circuitry configured to perform second wireless communication with a second external device based on a second communication protocol, memory storing one or more computer programs, and one or more application processors communicatively connected to the first communication circuitry, the second communication circuitry and the memory, wherein the one or more computer programs include computer-executable instructions that, when executed by the one or more application processors, cause the communication device to control the first communication circuitry and the second communication circuitry such that a sum of a first output power value output by the first communication circuitry during a designated time range and a second output power value output by the second communication circuitry during the designated time range does not exceed a preset total threshold.

In accordance with another aspect of the disclosure, a method performed by a communication device is provided. The method includes controlling, by the communication device, first communication circuitry and second communication circuitry such that a sum of a first output power value output by the first communication circuitry configured to perform first wireless communication with a first external device based on a first communication protocol during a designated time range and a second output power value output by the second communication circuitry configured to perform second wireless communication with a second external device based on a second communication protocol during the designated time range does not exceed a preset total threshold.

In accordance with another aspect of the disclosure, one or more non-transitory computer-readable storage media storing one or more computer programs including computer-executable instructions that, when executed by one or more processors of a communication device, cause the communication device to perform operations are provided. The operations include controlling, by the communication device, first communication circuitry and second communication circuitry such that a sum of a first output power value output by the first communication circuitry configured to perform first wireless communication with a first external device based on a first communication protocol during a designated time range and a second output power value output by the second communication circuitry configured to perform second wireless communication with a second external device based on a second communication protocol during the designated time range does not exceed a preset total threshold.

In accordance with another aspect of the disclosure, a communication device is provided. The communication device includes first communication circuitry performing communication with an external device in a first communication scheme, second communication circuitry performing communication with the external device in a second communication scheme, memory storing one or more computer programs, and one or more processors electrically communicatively to the first communication circuitry, the second communication circuitry and the memory, and configured to control output power of the first communication circuitry and the second communication circuitry, the one or more computer programs include computer-executable instructions that, when executed by the one or more processors, cause the communication device to control the first communication circuitry and the second communication circuitry such that a sum of a first output power value output by the first communication circuitry during a designated time range and a second output power value output by the second communication circuitry during the designated time range does not exceed a preset total threshold, wherein in case that at least one of the first communication circuitry or the second communication circuitry controls such that a maximum value of output power output by the first communication circuitry or the second communication circuitry does not exceed a first threshold or a second threshold that is an output threshold of the first communication circuitry or the second communication circuitry within the designated time range, and wherein the first output power value or the second output power value is the maximum value.

In accordance with another aspect of the disclosure, a method performed by a communication device is provided. The method includes controlling, by the communication device, first communication circuitry and second communication circuitry such that a sum of a first output power value output by the first communication circuitry performing communication with an external device in a first communication scheme during a designated time range and a second output power value output by the second communication circuitry performing communication with an external device in a second communication scheme during the designated time range does not exceed a designated total threshold, wherein in case that at least one of the first communication circuitry or the second communication circuitry controls such that a maximum value of output power output by the first communication circuitry or the second communication circuitry does not exceed a first threshold or a second threshold that is an output threshold of the first communication circuitry or the second communication circuitry within the designated time range, wherein the first output power value or the second output power value is the maximum value.

In accordance with another aspect of the disclosure, one or more non-transitory computer-readable storage media storing one or more computer programs including computer-executable instructions that, when executed by one or more processors of a communication device, cause the communication device to perform operations are provided. The operations include controlling, by the communication device, first communication circuitry and second communication circuitry such that a sum of a first output power value output by the first communication circuitry performing communication with an external device in a first communication scheme during a designated time range and a second output power value output by the second communication circuitry performing communication with an external device in a second communication scheme during the designated time range does not exceed a designated total threshold. In case that at least one of the first communication circuitry or the second communication circuitry controls such that a maximum value of output power output by the first communication circuitry or the second communication circuitry does not exceed a first threshold or a second threshold that is an output threshold of the first communication circuitry or the second communication circuitry within the designated time range, and wherein the first output power value or the second output power value is the maximum value.

In accordance with another aspect of the disclosure, a portable communication device is provided. The device includes cellular communication circuitry, non-cellular wireless communication circuitry, memory storing one or more computer programs and one or more processors disposed outside the cellular communication circuitry and the non-cellular wireless communication circuitry and communicatively coupled to the cellular communication circuitry, the non-cellular wireless communication circuitry, and the memory, wherein the one or more computer programs include computer-executable instructions that, when executed by the one or more processors, causes the portable communication device to identify first output power of the cellular communication circuitry in association with cellular communication between the cellular communication circuitry and a first external electronic device, and reduce or increase second output power of the non-cellular communication circuitry in association with the non-cellular wireless communication between the non-cellular wireless communication circuitry and a second external electronic device, at least partially based on the first output power.

In accordance with another aspect of the disclosure, a method performed by a portable communication device is provided. The method includes identifying, by the portable communication device, first output power of a cellular communication circuitry in association with cellular communication between the cellular communication circuitry of the portable communication device and a first external electronic device, and reducing or increasing, by the portable communication device, second output power of a non-cellular communication circuitry in association with non-cellular wireless communication between the non-cellular wireless communication circuitry of the portable communication device and a second external electronic device, at least partially based on the first output power.

In accordance with another aspect of the disclosure, one or more non-transitory computer-readable storage media storing one or more computer programs including computer-executable instructions that, when executed by one or more processors of a portable communication device, cause the communication device to perform operations are provided. The operations include identifying, by the portable communication device, first output power of a cellular communication circuitry in association with cellular communication between the cellular communication circuitry of the portable communication device and a first external electronic device, and reducing or increasing, by the portable communication device, second output power of a non-cellular communication circuitry in association with non-cellular wireless communication between the non-cellular wireless communication circuitry of the portable communication device and a second external electronic device, at least partially based on the first output power.

[BRIEF DESCRIPTION OF DRAWINGS]

FIG. 1 is a view illustrating an electronic device in a network environment according to various embodiments;

FIG. 2A is a block diagram illustrating an electronic device for supporting legacy network communication and 5G network communication according to various embodiments;

FIG. 2B is a block diagram illustrating an electronic device for supporting legacy network communication and 5G network communication according to various embodiments;

FIG. 3A is a flowchart illustrating an operation method of an electronic device according to various embodiments;

FIG. 3B is a view illustrating transmission power and SAR over time according to various embodiments;

FIGS. 4A to 4C illustrate graphs of transmission power per time according to various embodiments;

FIGS. 4D to 4E illustrate tables of transmission power per time according to various embodiments;

FIG. 5 is a block diagram illustrating an example electronic device according to an embodiment;

FIG. 6A is a view illustrating changes in an output power value of an electronic device according to an embodiment;

FIG. 6B is a view illustrating a distribution of output power values of an electronic device according to an embodiment;

FIG. 7A is a block diagram illustrating an example electronic device according to an embodiment;

FIG. 7B is a view illustrating a transmission state of a processor of an electronic device according to an embodiment;

FIG. 7C is a view illustrating a setting of an output power value for a processor of an electronic device according to an embodiment;

FIG. 7D is a view illustrating changes in output power values for a plurality of processors of an electronic device according to an embodiment;

FIG. 8A is a view illustrating changes in output power values for a plurality of processors of an electronic device according to an embodiment;

FIG. 8B is a view illustrating a distribution of output power values for a plurality of processors of an electronic device according to an embodiment;

FIG. 8C is a view illustrating a distribution of output power values for a plurality of processors of an electronic device according to an embodiment;

FIG. 9 is a flowchart illustrating an operation method of an electronic device according to an embodiment;

FIG. 10A is a flowchart illustrating an operation method of an electronic device according to an embodiment;

FIG. 10B is a flowchart illustrating an operation method of an electronic device according to an embodiment;

FIG. 11A is a view illustrating a change in operation mode for a plurality of processors of an electronic device according to a comparative example;

FIG. 11B is a view illustrating a change in operation mode for a plurality of processors of an electronic device according to a comparative example;

FIG. 11C is a view illustrating a change in operation mode for a processor of an electronic device according to an embodiment;

FIG. 11D is a view illustrating a change in operation mode for a processor of an electronic device according to an embodiment;

FIG. 12 is a view illustrating a change in operation mode for a plurality of processors of an electronic device according to an embodiment;

FIG. 13A is a view illustrating a change in operation mode for a processor of an electronic device according to an embodiment;

FIG. 13B is a view illustrating a change in operation mode for a processor of an electronic device according to an embodiment;

FIG. 13C is a view illustrating a change in operation mode for a processor of an electronic device according to an embodiment;

FIG. 14 is a flowchart illustrating an operation method of an electronic device according to an embodiment; and

FIG. 15 is a flowchart illustrating an operation method of an electronic device according to an embodiment; and

## [MODE FOR THE INVENTION]

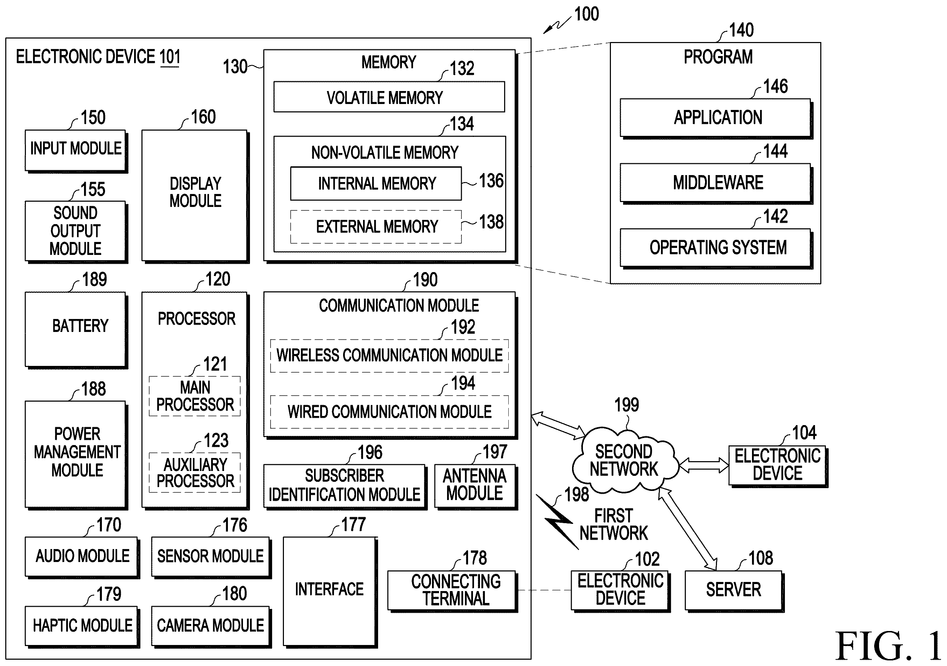

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth™, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a fourth-generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102 or 104, or the server 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

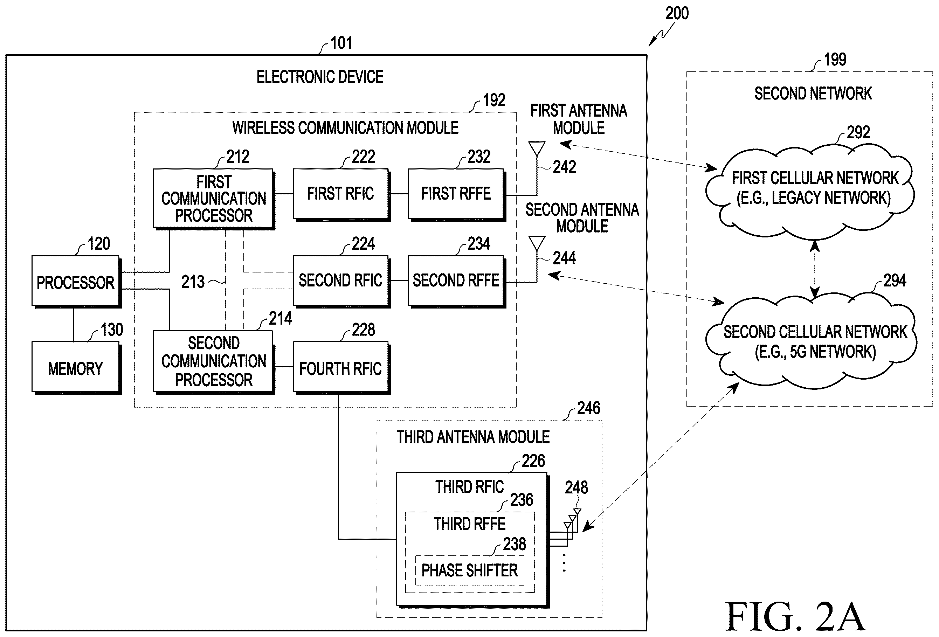

FIG. 2A is a block diagram 200 illustrating an electronic device 101 for supporting legacy network communication and 5G network communication according to various embodiments. Referring to FIG. 2A, the electronic device 101 may include a first communication processor 212, a second communication processor 214, a first radio frequency integrated circuit (RFIC) 222, a second RFIC 224, a third RFIC 226, a fourth RFIC 228, a first radio frequency front end (RFFE) 232, a second RFFE 234, a first antenna module 242, a second antenna module 244, a third antenna module 246, and antennas 248. The electronic device 101 may further include a processor 120 and memory 130. The second network 199 may include a first cellular network 292 and a second cellular network 294. According to an embodiment, the electronic device 101 may further include at least one component among the components of FIG. 1, and the second network 199 may further include at least one other network. According to an embodiment, the first communication processor 212, the second communication processor 214, the first RFIC 222, the second RFIC 224, the fourth RFIC 228, the first RFFE 232, and the second RFFE 234 may form at least part of the wireless communication module 192. According to another embodiment, the fourth RFIC 228 may be omitted or be included as part of the third RFIC 226.

The first communication processor 212 may establish a communication channel of a band that is to be used for wireless communication with the first cellular network 292 or may support legacy network communication via the established communication channel. According to various embodiments, the first cellular network may be a legacy network that includes second generation (2G), third generation (3G), fourth generation (4G), or long-term evolution (LTE) networks. The second CP 214 may establish a communication channel corresponding to a designated band (e.g., from about 6GHz to about 60GHz) among bands that are to be used for wireless communication with the second cellular network 294 or may support fifth generation (5G) network communication via the established communication channel. According to an embodiment, the second cellular network 294 may be a 5G network defined by the 3rd generation partnership project (3GPP). Additionally, according to an embodiment, the first CP 212 or the second CP 214 may establish a communication channel corresponding to another designated band (e.g., about 6GHz or less) among the bands that are to be used for wireless communication with the second cellular network 294 or may support fifth generation (5G) network communication via the established communication channel.

The first communication processor 212 may perform data transmission/reception with the second communication processor 214. For example, data classified as transmitted via the second cellular network 294 may be changed to be transmitted via the first cellular network 292. In this case, the first communication processor 212 may receive transmission data from the second communication processor 214. For example, the first communication processor 212 may transmit/receive data to/from the second communication processor 214 via an inter-processor interface 213. The inter-processor interface 213 may be implemented as, e.g., universal asynchronous receiver/transmitter (UART) (e.g., high speed-UART (HS-UART)) or peripheral component interconnect bus express (PCIe) interface, but is not limited to a specific kind. The first communication processor 212 and the second communication processor 214 may exchange packet data information and control information using, e.g., a shared memory. The first communication processor 212 may transmit/receive various types of information, such as sensing information, information about output strength, and resource block (RB) allocation information, to/from the second communication processor 214.

According to implementation, the first communication processor 212 may not be directly connected with the second communication processor 214. In this case, the first communication processor 212 may transmit/receive data to/from the second communication processor 214 via a processor 120 (e.g., an application processor). For example, the first communication processor 212 and the second communication processor 214 may transmit/receive data to/from the processor 120 (e.g., an application processor) via an HS-UART interface or PCIe interface, but the kind of the interface is not limited thereto. The first communication processor 212 and the second communication processor 214 may exchange control information and packet data information with the processor 120 (e.g., an application processor) using a shared memory.

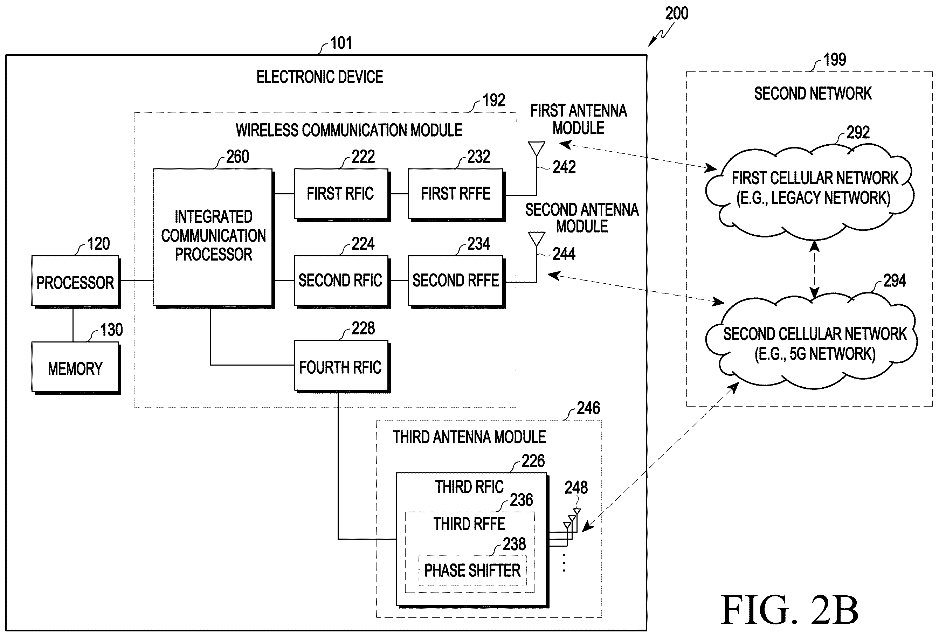

According to an embodiment, the first CP 212 and the second CP 214 may be implemented in a single chip or a single package. According to an embodiment, the first communication processor 212 or the second communication processor 214, along with the processor 120, an assistance processor 123, or communication module 190, may be formed in a single chip or single package. For example, as shown in FIG. 2B, an integrated communication processor 260 may support all of the functions for communication with the first cellular network 292 and the second cellular network 294.

As described above, at least one of the processor 120, the first communication processor 212, the second communication processor 214, or the integrated communication processor 260 may be implemented as a single chip or a single package. In this case, the single chip or single package may include memory (or storage means) storing instructions that cause at least some of operations performed according to various embodiments and a processing circuit (or operation circuit, but the term is not limited) for executing instructions. Instructions stored in the memory, when executed by the processor, may enable the electronic device 101 to perform at least one operation.

Upon transmission, the first RFIC 222 may convert a baseband signal generated by the first communication processor 212 into a radio frequency (RF) signal with a frequency ranging from about 700MHz to about 3GHz which is used by the first cellular network 292 (e.g., a legacy network). Upon receipt, the RF signal may be obtained from the first cellular network 292 (e.g., a legacy network) through an antenna (e.g., the first antenna module 242) and be pre-processed via an RFFE (e.g., the first RFFE 232). The first RFIC 222 may convert the pre-processed RF signal into a baseband signal that may be processed by the first communication processor 212.

Upon transmission, the second RFIC 224 may convert the baseband signal generated by the first communication processor 212 or the second communication processor 214 into a Sub6-band (e.g., about 6GHz or less) RF signal (hereinafter, "5G Sub6 RF signal") that is used by the second cellular network 294 (e.g., a 5G network). Upon receipt, the 5G Sub6 RF signal may be obtained from the second cellular network 294 (e.g., a 5G network) through an antenna (e.g., the second antenna module 244) and be pre-processed via an RFFE (e.g., the second RFFE 234). The second RFIC 224 may convert the pre-processed 5G Sub6 RF signal into a baseband signal that may be processed by a corresponding processor of the first communication processor 212 and the second communication processor 214.

The third RFIC 226 may convert the baseband signal generated by the second CP 214 into a 5G Above6 band (e.g., from about 6GHz to about 60GHz) RF signal (hereinafter, "5G Above6 RF signal") that is to be used by the second cellular network 294 (e.g., a 5G network). Upon receipt, the 5G Above6 RF signal may be obtained from the second cellular network 294 (e.g., a 5G network) through an antenna (e.g., the antenna 248) and be pre-processed via the third RFFE 236. The third RFIC 226 may convert the pre-processed 5G Above6 RF signal into a baseband signal that may be processed by the second communication processor 214. According to an embodiment, the third RFFE 236 may be formed as part of the third RFIC 226.

According to an embodiment, the electronic device 101 may include the fourth RFIC 228 separately from, or as at least part of, the third RFIC 226. In this case, the fourth RFIC 228 may convert the baseband signal generated by the second communication processor 214 into an intermediate frequency band (e.g., from about 9GHz to about 11GHz) RF signal (hereinafter, "IF signal") and transfer the IF signal to the third RFIC 226. The third RFIC 226 may convert the IF signal into a 5G Above6 RF signal. Upon receipt, the 5G Above6 RF signal may be received from the second cellular network 294 (e.g., a 5G network) through an antenna (e.g., the antenna 248) and be converted into an IF signal by the third RFIC 226. The fourth RFIC 228 may convert the IF signal into a baseband signal that may be processed by the second communication processor 214.

According to an embodiment, the first RFIC 222 and the second RFIC 224 may be implemented as at least part of a single chip or single package. According to various embodiments, when the first RFIC 222 and the second RFIC 224 in FIG. 2A or 2B are implemented as a single chip or a single package, they may be implemented as an integrated RFIC. In this case, the integrated RFIC is connected to the first RFFE 232 and the second RFFE 234 to convert a baseband signal into a signal of a band supported by the first RFFE 232 and/or the second RFFE 234, and may transmit the converted signal to one of the first RFFE 232 and the second RFFE 234. According to an embodiment, the first RFFE 232 and the second RFFE 234 may be implemented as at least part of a single chip or single package. According to an embodiment, at least one of the first antenna module 242 or the second antenna module 244 may be omitted or be combined with another antenna module to process multi-band RF signals.

According to an embodiment, the third RFIC 226 and the antenna 248 may be disposed on the same substrate to form the third antenna module 246. For example, the wireless communication module 192 or the processor 120 may be disposed on a first substrate (e.g., a main painted circuit board (PCB)). In this case, the third RFIC 226 and the antenna 248, respectively, may be disposed on one area (e.g., the bottom) and another (e.g., the top) of a second substrate (e.g., a sub PCB) which is provided separately from the first substrate, forming the third antenna module 246. Placing the third RFIC 226 and the antenna 248 on the same substrate may shorten the length of the transmission line therebetween. This may reduce a loss (e.g., attenuation) of high-frequency band (e.g., from about 6GHz to about 60GHz) signal used for 5G network communication due to the transmission line. Thus, the electronic device 101 may enhance the communication quality with the second cellular network 294 (e.g., a 5G network).

According to an embodiment, the antenna 248 may be formed as an antenna array which includes a plurality of antenna elements available for beamforming. In this case, the third RFIC 226 may include a plurality of phase shifters 238 corresponding to the plurality of antenna elements, as part of the third RFFE 236. Upon transmission, the plurality of phase shifters 238 may change the phase of the 5G Above6 RF signal which is to be transmitted to the outside (e.g., a 5G network base station) of the electronic device 101 via their respective corresponding antenna elements. Upon receipt, the plurality of phase shifters 238 may change the phase of the 5G Above6 RF signal received from the outside to the same or substantially the same phase via their respective corresponding antenna elements. This enables transmission or reception via beamforming between the electronic device 101 and the outside.

The second cellular network 294 (e.g., a 5G network) may be operated independently (e.g., as standalone (SA)) from, or in connection (e.g., as non-standalone (NSA)) with the first cellular network 292 (e.g., a legacy network). For example, the 5G network may have the access network (e.g., 5G radio access network (RAN) or next generation RAN (NG RAN)) but may not have the core network (e.g., next generation core (NGC)). In this case, the electronic device 101, after accessing a 5G network access network, may access an external network (e.g., the Internet) under the control of the core network (e.g., the evolved packet core (EPC)) of the legacy network. Protocol information (e.g., LTE protocol information) for communication with the legacy network or protocol information (e.g., New Radio (NR) protocol information) for communication with the 5G network may be stored in the memory 130 and be accessed by other components (e.g., the processor 120, the first communication processor 212, or the second communication processor 214).

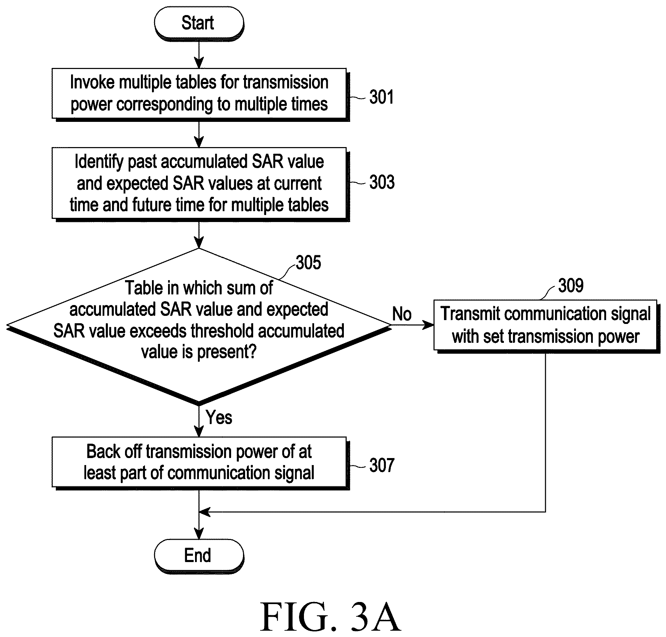

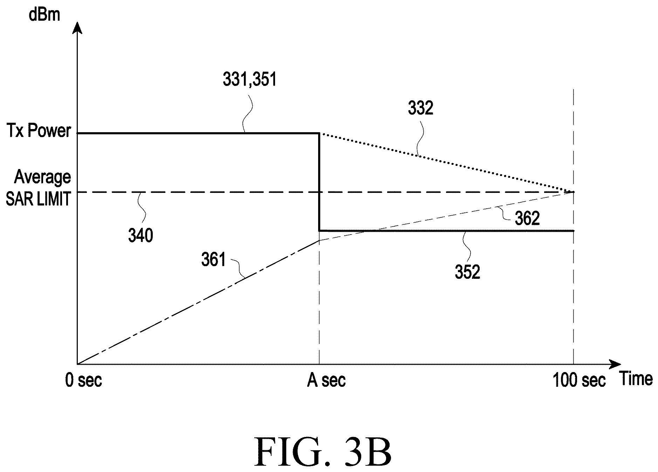

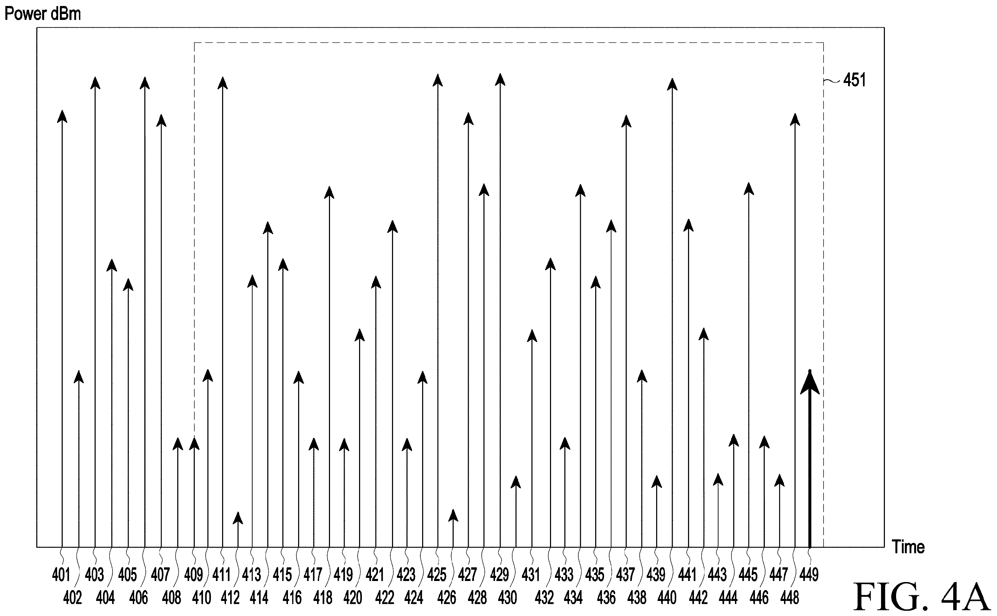

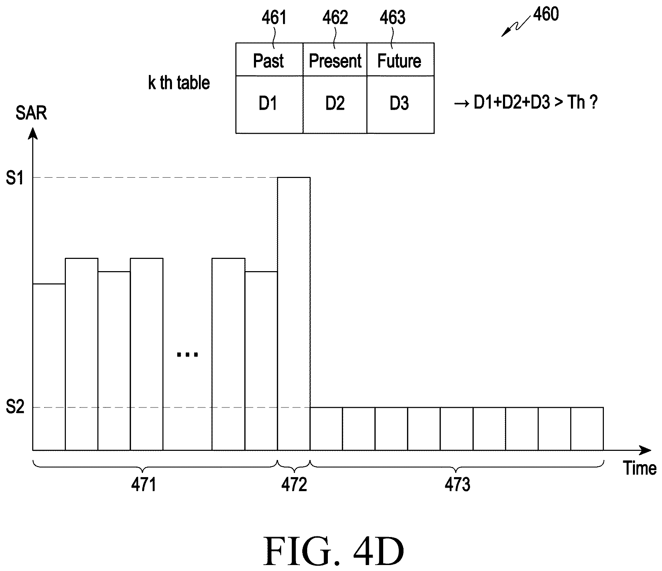

FIG. 3A is a flowchart illustrating an operation method of an electronic device according to various embodiments. The embodiment of FIG. 3A is described with reference to FIGS. 3B and 4A to 4E. FIG. 3B is a view illustrating transmission power and SAR over time according to various embodiments. FIGS. 4A to 4C illustrate graphs of transmission power per time according to various embodiments. FIGS. 4D to 4E illustrate tables of transmission power per time according to various embodiments.

According to an embodiment, the UE may back off the transmission power, the maximum transmission power level (MTPL), e.g., if the SAR expected by the transmission power is expected to exceed a threshold. For example, upon identifying that a specific event (e.g., a grip, hot-spot, or proximity) occurs, the UE may transmit an RF signal in the backoff power corresponding to the event or transmit an RF signal in the transmission power set based on the maximum transmission power level. The backoff operation may include an operation of reducing the transmission power to a designated level to decrease the electromagnetic wave emissions that may affect the human body.

According to an embodiment, technology of backing off the transmission power (or maximum transmission power level) based on the total SAR value accumulated for a designated time (or the average of the SARs generated for a designated time) may be used. The SAR that instantaneously affects the human body and/or the SAR that affects the human body on average should also be considered. Therefore, the transmission power (or maximum transmission power level) when the total SAR value accumulated (or the average of the SARs generated for a designated time) meets a designated condition may be backed off.

According to an embodiment, the electronic device may perform a power control operation to backoff the transmission power based on the total amount of the accumulated SAR values. According to an embodiment, the "SAR backoff operation" may include an operation of reducing the transmission power of the antenna of the electronic dvice by a designated level. When SAR is controlled based on the accumulated SAR value, the electronic device may control the transmission power based on the average for a designated time, thereby performing control such that the accumulated SAR value for a time period corresponding to the time window does not exceed the SAR threshold even without performing frequent backoff. When controlling transmission power based on the average of the SARs generated for a designated time, the electronic device may relatively reduce the risk of deterioration of transmission performance due to frequent backoff as compared with the power control scheme that performs backoff by comparing the SAR value instantaneously generated (or instantaneous value) with the SAR threshold.

In an embodiment, the total amount of SARs accumulated for each of the plurality of antennas may be managed, such that the maximum transmission power level may be set for each of the plurality of antennas. The electronic device (e.g., UE), when a plurality of processors (or chipsets) associated with a plurality of communication schemes are included in the electronic device, may change the power of the transmission signal based on the SAR distribution amount associated with short-range wireless communication or cellular network communication. For example, when the SAR distribution amount associated with short-range wireless communication is larger than the SAR distribution amount associated with cellular network communication, the UE may relatively increase the transmission power of the signal associated with short-range wireless communication. In an embodiment, a physical interface between the plurality of processors may be required to manage the SAR distribution amounts corresponding to the plurality of processors.

According to various embodiments, an electronic device 101 (e.g., at least one of the processor 120, the first communication processor 212, the second communication processor 214, or the integrated communication processor 260) may invoke (or read) a plurality of tables for the transmission power corresponding to a plurality of times in operation 301. Before describing the embodiment associated with FIG. 3A, terms as shown in Table 1 are defined.

[Table 1]

| a. Normal MAX Power: the maximum transmission power when SAR margin remains |
| --- |
| b. Normal Max SAR: the value of SAR generated in normal MAX power |
| c. Backoff MAX Power: the maximum transmission power when back-off is performed due to shortage of SAR margin |
| d. Backoff Max SAR: the value of SAR generated when operating in backoff max power |
| e. Measurement Time(T): period for calculating the accumulated SAR or SAR average |
| f. Measurement Period(P): period (or time interval) for calculating SAR |
| g. Number of tables for calculating SAR: T/P - 1 |
| h. Average SAR LIMIT: the maximum value of the average SAR that should not be exceeded during T |
| i. Average Time(A_Time): the time measured with SARs accumulated |
| j. Accumulated SAR : the sum of SARs accumulated for average time. |
| k. Max accumulated SAR : Average SAR LIMIT X measurement Time |
| l. Average SAR : the value of average SAR used for average Time |
| m. Tx Room : Max accumulated SAR - accumulated SAR, SAR remaining after use |
| n. Remain Time(R_Time) : total measurement time - time (A_Time) during which SAR is measured up to now |

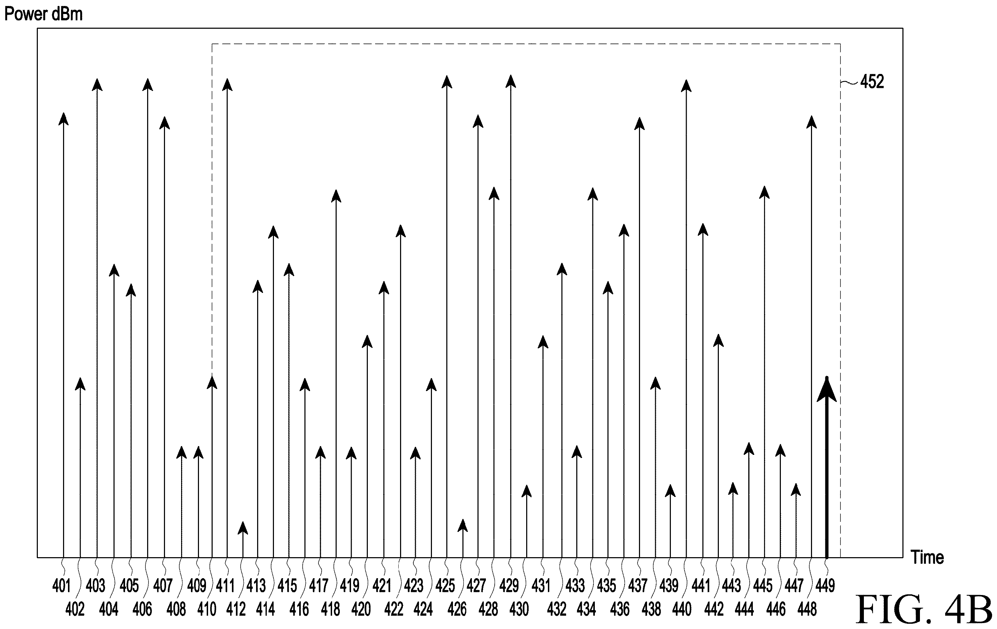

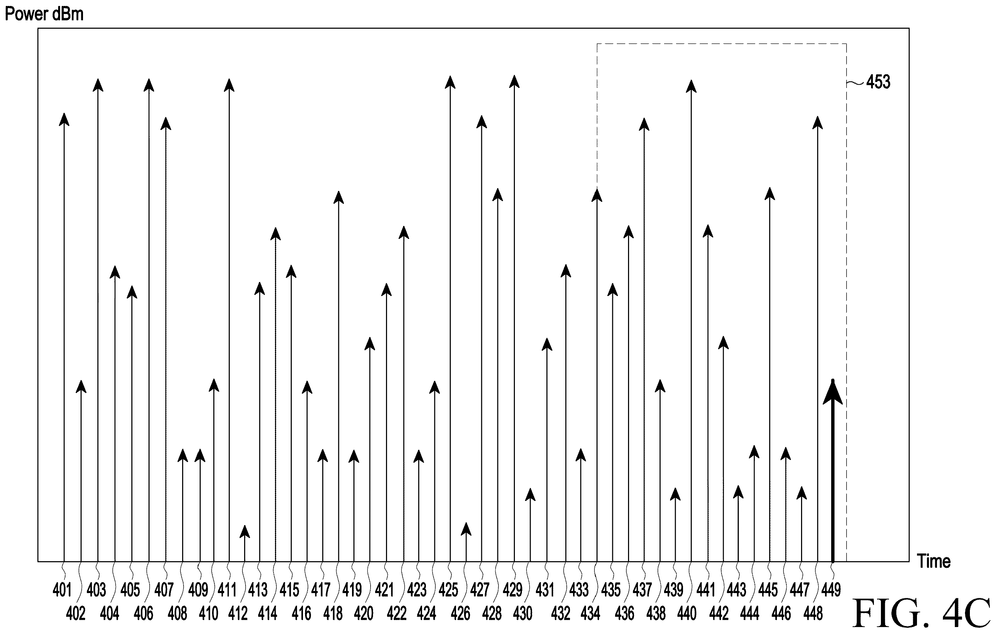

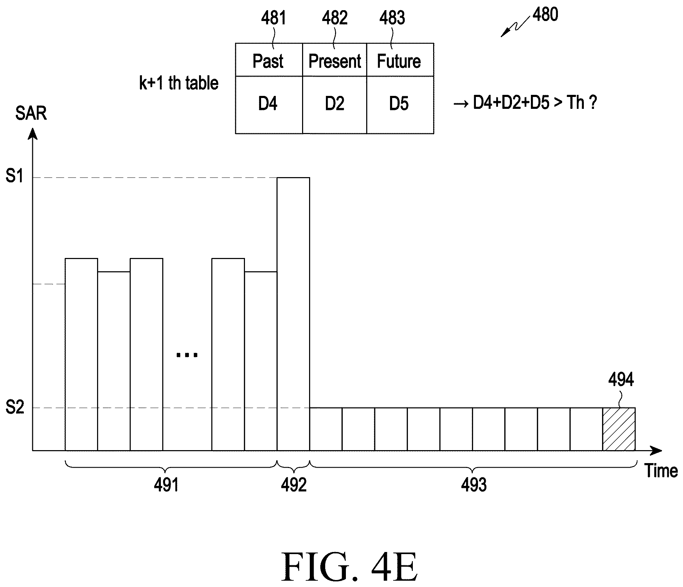

First, the table is described with reference to FIGS. 4A to 4C. Referring to FIG. 4A, a graph including transmission power for a plurality of times 401 to 449 is illustrated. The accumulated SAR (the accumulated SAR of Table 1) for a measurement time (the measurement time of Table 1), e.g., a measurement time including 50 time points, may be required to maintain a value below the maximum accumulated SAR (the max accumulated SAR of Table 1). The electronic device 101 may determine the transmission power of an RF signal to be transmitted at the current time point 449 to allow the accumulated SAR of nine future time points (e.g., the remain time of Table 1) in addition to the accumulated SAR at the current time point 449 and any past time points 409 to 448 (e.g., the average time of Table 1) to maintain below the maximum accumulated SAR. Further, as shown in FIG. 4B, the electronic device 101 may identify the transmission powers 452 which are one time point shifted from the transmission powers 451 at the current time point 449 and any past time points 409 to 448. Shifting by one time point may mean not reflecting data at the oldest time point (e.g., time point 409 in FIG. 4A). The number of transmission powers 452 at the current time point 449 and any past time points 410 to 448 is 40 and may be one smaller than the number, 41, of the transmission powers 451 of FIG. 4A. The electronic device 101 may determine the transmission power at the current time point 449 to allow the sum of the SAR by the transmission powers 452 and the SAR predicted at additional future 10 time points to maintain the maximum accumulated SAR or less. As shown in FIG. 4C, the electronic device 101 may identify the transmission powers 453 at the current time point 449 and any past time points 434 to 448 which are 25 time point shifted from the transmission powers 451. The number of transmission powers 453 is 16 and may be 25 smaller than the number, 41, of the transmission powers 451 of FIG. 4A. The electronic device 101 may determine the transmission power at the current time point 449 to allow the sum of the SAR by the transmission powers 453 and the SAR predicted at additional future 34 time points to maintain the maximum accumulated SAR or less. Although not shown, the electronic device 101 may manage a plurality of graphs each of which is one time point shifted. The period of calculating the SAR is the measurement period P of Table 1 and may be, e.g., the interval between the transmission powers in FIGS. 4A to 4C. The electronic device 101 may calculate and/or manage T/P-1 tables for a specific time point. Hereinafter, a configuration of identifying an expected SAR value is described with reference to FIGS. 4D and 4E.

Referring to FIG. 4D, the electronic device 101 may identify the kth SAR table 460. The kth SAR table 460 may include D1, which is the accumulated SAR value 461 at at least one past time point, the maximum SAR value (D2) 462 at the current time, and the expected SAR value (D3) 463 at at least one future time point. Referring to the graph, the accumulated SAR value corresponding to at least one past time point may be D1. D1, which is the accumulated SAR value 461 at at least one past time point may be identified based on the antenna configuration. The number of at least one past time point may be a number that is one smaller than the total number (e.g., 100) of time points corresponding to the measurement time (e.g., 50 seconds) in the first table. N, which is the total number (e.g., 100) of time points may be a result of dividing the measurement time by the sampling period (or shift period). Accordingly, in the kth table, the number of at least one past time point may be k smaller than the total number of time points. The electronic device 101 may identify D1 which is the accumulated SAR value of the N-k past time points 471. The electronic device 101 may use the maximum SAR value S1 for the current time point 472. The maximum SAR value S1 (e.g., the normal max SAR in Table 1) may be the SAR value corresponding to a designated maximum transmission power (e.g., the normal max power of Table 1) in the electronic device 101. In an embodiment, for the current time point 472, the SAR value immediately before the current time point 472 may be used. In an embodiment, for the current time point 472, the average SAR value for the past time points 471 of the current time point 472 may be used. The electronic device 101 may calculate the sum of SAR values S2 (e.g., the backoff max SAR of Table 1) for the transmission power (e.g., the backoff max power of Table 1) backed off, for at least one future time point 473. The electronic device 101 may identify D3 as the accumulated SAR for at least one future time point 473. In the kth table, the number of at least one future time point may be k-1. Accordingly, the electronic device 101 may identify whether the total SAR sum D1+D2+D3 for N time points including N-k past time points, one current time point, and k-1 future time points exceeds the maximum accumulated SAR, for the kth table. Upon identifying the excess, the electronic device 101 may back off the transmission power of the current time point. Referring to FIG. 4E, the electronic device 101 may identify the k+1th table 480 as shown in FIG. 4E. For the k+1th table 480, the electronic device 101 may identify D4, which is the accumulated SAR value 481 of at least one past time point, D2, which is the maximum SAR value 482 of the current time point, and D5, which is the expected SAR value 483 of at least one future time point. The electronic device 101 may identify whether the accumulated SAR value of D4+D2+D5 exceeds the maximum accumulated SAR. The number of at least one past time point 491 in the k+1th table may be one smaller than the number of at least one past time point 471 in the kth table. The number of at least one future time point 493 in the k+1th table may be one (494) larger than the number of at least one future time point 473 in the kth table.

According to various embodiments, in operation 303, the electronic device 101 may identify the past accumulated SAR value and the expected SAR value at the current time point and future time point for a plurality of tables corresponding to at least one future time point. The electronic device 101 may identify the accumulated SAR value for a first table and a total of N-1 tables, which are shifted by i time points (where i is 1 or more and less than N-2) from the first table. In operation 305, the electronic device 101 may identify whether there is a table in which the sum of the accumulated SAR value and the expected SAR value exceeds a threshold. If there is a table exceeding the threshold (yes in 305), the electronic device 101 may back off any one (or the maximum transmission power level (MTPL)) of at least some transmission powers of the RF signals in operation 307. It will be appreciated by one of ordinary skill in the art that the back-off of transmission power may be replaced with back-off of maximum transmission power level in the disclosure. If there is no table exceeding the threshold (no in 305), the electronic device 101 may transmit an RF signal in the set transmission power in operation 309. The back-off of the maximum transmission power value may mean back-off of the maximum transmission power value in various embodiments of the disclosure.

As described above, the electronic device 101 may determine the maximum transmission power value so that the average SAR value used during the measurement time does not exceed the average SAR limit. Or, the electronic device 101 may determine the maximum transmission power value so that the accumulated SAR during the measurement time does not exceed the max accumulated SAR. The electronic device 101 may determine the maximum value of the maximum power for the next time period every time P. For example, conditions for operating in normal max power during next time P may be as follows.

Condition: Tx Room > SAR generated when operating in normal max power during next P (normal max SAR of Table 1) + SAR (backoff max SAR of Table 1) generated when operating in backoff max power during (Remain Time - P) = P X normal max SAR + (Remain Time - P) X backoff max SAR

In the condition, Tx Room may be the max accumulated SAR minus the SAR accumulated up to now. In the condition, (Remain Time - P) may be T - average time - P, e.g., the future time point described in connection with FIGS. 4A to 4E. P may mean the current time point. Average time may mean the past time point. Meeting the condition may mean that although the electronic device 101 sets the maximum transmission power of the normal max power during time P, there is no table in which the accumulated SAR exceeds the max accumulated SAR. Not meeting the condition may mean that there is a chance of presence of a table in which the accumulated SAR exceeds the max accumulated SAR if the electronic device 101 sets the maximum transmission power of the normal max power during time P, in which case the electronic device 101 may set the backoff max power as the maximum transmission power during time P.

Table 2 shows examples of variables and conditions.

[Table 2]

| |
|---|
| [Example of variable settings]<br>i. Normal MAX Power : 23dBm<br>ii. Backoff MAX Power : 20dBm<br>iii. Measurement Time(T) : 100 seconds<br>iv. Measurement Period(P) : 0.5 seconds<br>v. Number of SAR Calculator tables : 199<br>vi. Average SAR LIMIT : 1.5mW/g<br>vii. Max accumulated SAR : 150mW/g<br>viii. When Normal Max SAR => 23dBm, SAR : 2mW/g<br>ix. When Backoff Max SAR => 20dBm, SAR : 1mW/g |
| [time point when the maximum power switches from normal max power to backoff max power]Average time X normal max power + (100 - average time) X backoff max power <= time point when accumulated max SAR is met = Average time X 2 mW/g + (100 - average time) X 1mW/g <= 150<br>mW/g<br><=> Average time <=50 |

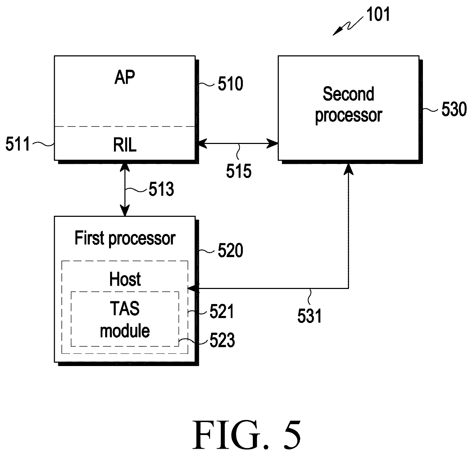

In the example of Table 2, it is described that continuous use of the normal max power in the maximum transmission power for 50 seconds is possible and, after 50 seconds, back-off to the backoff max power is required. For example, it is hypothesized to transmit an RF signal in 23dBm which is the normal max power, for 50 seconds, transmit an RF signal in 23dBm which is the normal max power for the next P (0.5 seconds), and transmit an RF signal in 20dBm which is the backoff max power for 49.5 seconds which is (remain time - P). In this case, Tx Room may be 150mW/g - 50 X 2 mW/g, i.e., 50mW/g. The SAR generated for time P may be 2mW/g X 0.5 seconds, i.e., 1mW/g. The SAR generated during (remain time - P) may be 49.5 seconds X 1mW/g, i.e., 49.5 mW/g. In this case, it may be identified that the accumulated SAR during P and (remain time - P) is 50.5 mW/g which exceeds the Tx room, and thus, it is required to back off the maximum value of the transmission power at time P. The above-described example is described with reference to FIG. 3B which describes the transmission power associated with one radio access technology (RAT). For example, referring to FIG. 3B, up to A seconds (e.g., 50 seconds), the maximum transmission power may be set to the normal max power 351 but, after A seconds, it may be identified to be backed off to the backoff max power 352. The slope of the second portion 362 of the accumulated SAR may be formed to be smaller than the slope of the first portion 361 of the accumulated SAR according to the backoff of the maximum value of the maximum transmission power. It may be identified that the average SAR 331 before A seconds exceeds the average SAR limit 340, but at the time when it is 100 seconds according to backoff, the average SAR 332 is identical to the value of the average SAR limit 340. FIG. 5 is a block diagram illustrating an example electronic device according to an embodiment. According to an embodiment, referring to FIG. 5, an electronic device 101 (e.g., the electronic device 101 of FIG. 1) may include an application processor (hereinafter, "AP") 510 (e.g., the main processor 121 of FIG. 1 and/or the processor 120 of FIG. 2A or 2B), a first processor 520 (e.g., at least one of the auxiliary processor 123 of FIG. 1, the first communication processor 212 or the second communication processor 214 of FIG. 2A, or the integrated communication processor 260 of FIG. 2B), and a second processor. A processor 530 (e.g., the auxiliary processor 123 of FIG. 1). In an embodiment, the electronic device 101 may be a communication device (or a portable communication device) performing communication with an external device (e.g., a base station or an access point). The electronic device 101 may include a plurality of processors supporting a plurality of communication schemes. The communication schemes supported by the electronic device 101 may include, but is not limited to, the wireless local area network (WLAN), basic rate (BR), enhanced data rate (EDR), or wireless wide area network (WWAN).

In an embodiment, a radio interface layer (RIL) 511 for transmitting or receiving control information may be disposed between the AP 510 and the first processor 520 (or between the AP 510 and the second processor 530). The RIL 511 may include a protocol for communication between different processors. The RIL 511 may be, e.g., an interface implemented by software. The RIL 511 may correspond to the middleware 144 of FIG. 1. In an embodiment, the operation performed by the RIL 511 may be understood as an operation performed by the AP 510. The AP 510 may perform communication with the first processor 520 through a signal line 513 connected between the first processor 520 and the AP 510. The AP 510 may perform communication with the second processor 530 through a signal line 515 connected between the second processor 530 and the AP 510.

In an embodiment, based on executing the host 521, the first processor 520 may perform control such that the sum of output power values output by the first processor 520 and the second processor 530 to be equal to or less than a total threshold.

In an embodiment of the disclosure, the output power value output by the first processor 520 may include an output power value output through a first antenna electrically connected to the first processor. The first antenna may be an antenna configured to output an RF signal associated with a communication scheme (or a first RAT) supported by the first processor 520 among a plurality of antennas included in the electronic device 101. The communication scheme supported by the first processor 520 is not necessarily limited to a single RAT, and may include a plurality of RATs (e.g., 2G, 3G, LTE, 5G network communication, or a combination thereof) associated with cellular communication. The first processor 520 may change the configuration of the transmission antenna, based on controlling the operation of at least one RF component (e.g., the first RFIC 222, the second RFIC 224, the third RFIC 226, the fourth RFIC 228, the first RFFE 232, the second RFFE 234, the third RFFE 236, or a combination thereof in FIG. 2A or 2B) included in the electronic device 101, corresponding to at least one of a band corresponding to the first RAT, a type of the first RAT, or an output power value output by the first antenna. For example, the first processor 520 may change the configuration of the antenna configured to output the RF signal, based on identifying an event associated with the band change in the intra-RAT. The first processor 520 may change the configuration of the antenna configured to output the RF signal based on identifying an event associated with the inter-RAT handover. When it is predicted that the output power value output by the antenna configured as the transmission antenna exceeds an SAR threshold set for the first processor 520, the first processor 520 may change the configuration of the antenna configured to output the RF signal. For example, when a condition associated with transmission (Tx) hopping is met, the first processor 520 may perform transmission hopping by changing the configuration of the antenna configured to output the RF signal. The event of triggering to change the configuration of the first antenna is not limited to the above-described example.

In an embodiment of the disclosure, the output power value output by the second processor 530 may include an output power value output through a second antenna electrically connected to the second processor. The second antenna may be an antenna configured to output an RF signal associated with a communication scheme (or a second RAT) supported by the second processor 530 among a plurality of antennas included in the electronic device 101. The second RAT may include, e.g., short-range wireless communication such as WLAN, BR, EDR, or WWAN, but is not limited thereto. The configuration of the second antenna may be changed corresponding to a band corresponding to the second RAT and/or an output power value output by the second antenna. For example, the configuration of the second antenna may be changed when the band corresponding to the second RAT is changed from a first band (e.g., about 2.4 GHz) to a second band (e.g., about 5 GHz). The configuration of the second antenna is not limited to the above-described example, and a plurality of bands corresponding to the second RAT may be supported by one antenna. The configuration of the second antenna may be changed when it is predicted that the output power value output by the antenna configured as the transmission antenna exceeds an SAR threshold set for the second processor 530. For example, the configuration of the second antenna may be changed when a condition associated with transmission hopping is met. In an embodiment, the second processor 530 may directly change the configuration of the second antenna, based on controlling the operation of the at least one RF component. In an embodiment, the AP 510 may transmit a control signal to the second processor 530 to change the configuration of the second antenna through the signal line 515. In an embodiment, the first processor 520 may transmit a control signal to the second processor 530 to change the configuration of the second antenna through the physical interface 531.

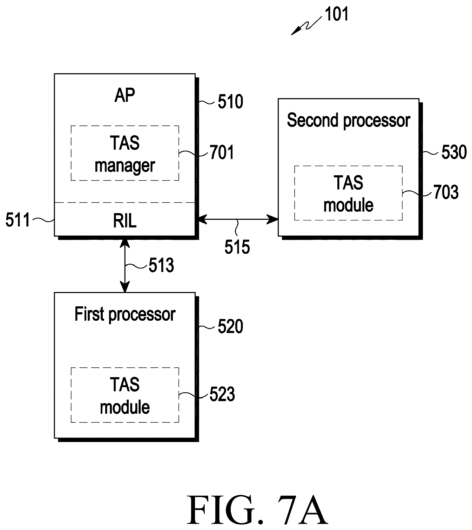

In an embodiment, the first processor 520 may control the first communication module and the second communication module such that the sum of the first output power value output by the first communication module (e.g., the first antenna) during a designated time range and the second output power value output by the second communication module (e.g., the second antenna) during the designated time range does not exceed a designated total threshold. The first communication module may include a communication circuit. The first communication module may be referred to as a first communication circuit. The first communication module may include a communication circuit. The second communication module may be referred to as a second communication circuit. In an embodiment, controlling the first communication module and the second communication module such that the sum of the first output power value output by the first communication module during the designated time range and the second output power value output by the second communication module during the designated time range does not exceed the preset total threshold may include controlling the first communication module and the second communication module such that the sum of the average of the SARs accumulated during the designated time range corresponding to the first communication module and the average of the SARs accumulated during the designated time range corresponding to the second communication module does not exceed the total threshold. In an embodiment, the first antenna and the second antenna may be included in the same antenna group. When a TAS module 523 is included in the first processor 520, the first processor 520 may perform control to allow the first output power value output by the first antenna corresponding to the first processor 520 to be maintained below a set value during a designated time range. When a TAS module (not shown) is included in the second processor 530, the second processor 530 may perform control to allow the second output power value output by the second antenna corresponding to the second processor 530 to be maintained below a set value for a designated time range, based on information related to the output power value received from the first processor 520 through the physical interface 531. In an embodiment, when each of the first output power value and the second output power value is maintained below the set value, the sum of the first output power value and the second output power value for the designated time range may not exceed the total threshold. In an embodiment, when the TAS module 523 is implemented as at least a portion of the application processor 510, the application processor 510 may control the first communication module and the second communication module such that the sum of the first output power value output by the first communication module during a designated time range and the second output power value output by the second communication module during the designated time range does not exceed a preset total threshold. An embodiment in which the first communication module and the second communication module are controlled by the application processor 510 is described below with reference to FIG. 7A.

In an embodiment, the first processor 520 may control the first communication module and the second communication module such that the sum of the SAR value accumulated corresponding to the first communication module (e.g., the first antenna) during a designated time range and the SAR value accumulated corresponding to the second communication module (e.g., the second antenna) during the designated time range does not exceed a preset total threshold. The host 521 may be a module implemented as software for managing any one of SAR values generated by the operations of the plurality of processors, SAR values consumed by the plurality of processors, or output power values output by the plurality of processors to be equal to or less than a set threshold. In an embodiment, the SAR value consumed by the processor may include an SAR value accumulated during a designated time range due to an RF signal output by an antenna connected to the processor. In an embodiment, the SAR threshold may be set corresponding to the antenna group. The first processor 520 may control each of the plurality of communication modules such that the sum of the output power values output by the antennas included in the same antenna group (or the sum of the accumulated SAR values corresponding to the antennas) does not exceed a threshold (or an SAR threshold) set corresponding to the antenna group. For example, the electronic device 101 may include a plurality of antenna groups. The first SAR threshold may be set corresponding to a plurality of antennas included in the first antenna group. The second SAR threshold may be set corresponding to a plurality of antennas included in the second antenna group. The first antenna group may include an antenna configured to output an RF signal associated with a communication scheme supported by the first processor 520 and an antenna configured to output an RF signal associated with a communication scheme supported by the second processor 530. The second antenna group may also include an antenna configured to output an RF signal associated with a communication scheme supported by the first processor 520 and an antenna configured to output an RF signal associated with a communication scheme supported by the second processor 530. The first antenna group may be distinguished from the second antenna group based on the distance between the antennas. For example, the distance between the antennas included in the first antenna group may be relatively smaller than the distance between the antenna included in the first antenna group and the antenna included in the second antenna group.

In an embodiment, e.g., the first processor 520 may identify an output power value (e.g., an average of the output power values) output by the first antenna connected to the first processor 520 for a designated time period, based on executing the time-average specific absorption rate (TAS) module 523. The TAS module 523 may be implemented as at least a part of the host 521, but the implementation of the software module included in the first processor 520 is not limited. The first processor 520 may identify an SAR value (e.g., an accumulated SAR value) consumed by the first processor 520 for a designated time period, based on executing the TAS module 523. In an embodiment, the power value of the signal radiated by the first antenna corresponding to the first processor 520 may be changed by the first processor 520. Accordingly, the average of the SAR corresponding to the first antenna may change. For example, when the first processor 520 increases the transmission power of the RF signal corresponding to the first antenna, the accumulated SAR value (or the average of the SAR value) may increase close to an SAR limit (e.g., the SAR threshold) set corresponding to the antenna group including the first antenna. The first processor 520 may identify the changed accumulated SAR value (or the average of the SAR value) based on the operation of the TAS module 523 included in the first processor 520. In an embodiment, the first processor 520 may perform control to allow the sum of SAR values generated when the first processor 520 and the second processor 530 transmit an RF signal through at least some of a plurality of antennas (e.g., at least one of the antenna module 197 of FIG. 1, the first antenna module 242, the second antenna module 244, the third antenna module 246, or the antennas 248 of FIG. 2A) included in the electronic device 101 to be equal to or less than a total threshold.

In an embodiment, the first processor 520 may identify the output power value output by the second antenna corresponding to the second processor 530 through the physical interface 531 connected between the second processor 530 and the first processor 520. In an embodiment, the first processor 520 may be, but is not limited to, a processor (e.g., at least one of the first communication processor 212 or the second communication processor 214 of FIG. 2A, or the integrated communication processor 260 of FIG. 2B) configured to transmit or receive a signal associated with cellular communication through at least one antenna, based on establishing a communication connection with a cellular network. The second processor 530 may be a processor (e.g., a Wi-Fi processor or a Bluetooth low energy (BLE) processor) configured to transmit or receive a signal associated with short-range communication through at least one antenna based on establishing a communication connection with an access point or an external electronic device supporting short-range communication, but is not limited thereto. For example, the first processor 520 may identify the output power value output by the second antenna corresponding to the second processor 530 for a designated time period through the physical interface 531 based on a protocol for performing communication with the second processor 530. The first processor 520 may identify an SAR value (or an SAR value accumulated due to radiation of an RF signal by the second antenna) consumed by the second processor 530 for a designated time period through the physical interface 531. Although not specifically illustrated in FIG. 5, the second processor 530 may include a TAS module. Based on executing the TAS module, the second processor 530 may identify a parameter (or Tx information) associated with an SAR corresponding to a time window associated with a communication scheme supported by the second processor 530. For example, the second processor 530 may identify an output power value (e.g., an average of the output power values) output by the second antenna corresponding to the second processor 530 during a time period corresponding to the time window. The second processor 530 may identify an SAR value (e.g., an average of the SAR values) accumulated by the transmission operation of the second processor 530. The second processor 530 may transmit the identified parameter associated with the SAR to the first processor 520 through the physical interface 531. In an embodiment, the function of controlling the transmission power of the plurality of processors to meet the SAR-related standard, based on the sum of the output power values output by the plurality of processors or the sum of the SAR values consumed by the plurality of processors, may be referred to as "combined TAS".

In an embodiment, whether communication based on a physical interface between the first processor 520 and the second processor 530 is supported may rely on the manufacturer of the first processor 520 or the second processor 530.

Table 3 shows an example of whether combined TAS is supported according to the manufacturer.

[Table 3]

| Combined TAS | | First processor | | |
|---|---|---|---|---|
| | | Vendor A | Vendor B | Vendor C |
| Second processor | Vendor A | **supported** | not supported | not supported |
| | Vendor B | not supported | not yet | not supported |
| | Vendor C | not supported | not supported | not yet |

In the example of Table 3, it is described that combined TAS is supported when a plurality of processors are provided by the same manufacturer (e.g., vendor A). In an embodiment, even when a plurality of processors are provided by the same manufacturer, if a physical interface for direct communication between processors is not implemented (e.g., vendor B or vendor C), a combined TAS may not be supported. As can be identified from Table 3, the combined TAS may not be supported when the manufacturers respectively corresponding to the plurality of processors included in the electronic device 101 differ, e.g., when the manufacturer of the first processor differs from the manufacturer of the second processor. It is described with reference to FIG. 5 that the first processor 520 manages the output power values corresponding to the first processor 520 and the second processor 530 to be the total threshold or less, but the embodiments are not limited thereto. For example, the electronic device 101 may further include a third processor (not shown). A physical interface based on a protocol for performing communication between processors may be implemented between the first processor 520 and the third processor. The first processor 520 may perform control to allow the sum of output power values output by the first processor 520, the second processor 530, and the third processor to be equal to or less than a total threshold. According to an embodiment, for a designated time, the first processor 520 may perform control to allow the sum of output power values output by the first processor 520, the second processor 530, and the third processor to be equal to or less than the total threshold. The first processor 520 may perform control to allow the sum of the SAR values accumulated by the first processor 520, the second processor 530, and the third processor to be equal to or less than the total threshold. According to an embodiment, the first processor 520 may perform control such that the sum of the SAR values (or average of SAR values) accumulated for a designated time corresponding to a first antenna configured to transmit an RF signal associated with the communication scheme supported by the first processor 520, the SAR values (or average of SAR values) accumulated during a designated time corresponding to a second antenna configured to transmit an RF signal associated with the communication scheme supported by the second processor 530, and the SAR values (or average of SAR values) accumulated during a designated time corresponding to a third antenna configured to transmit an RF signal associated with the communication scheme supported by the third process is the total threshold or less. In an embodiment, the host 521 may be a software module implemented as at least a portion of the second processor 530 or the third processor.

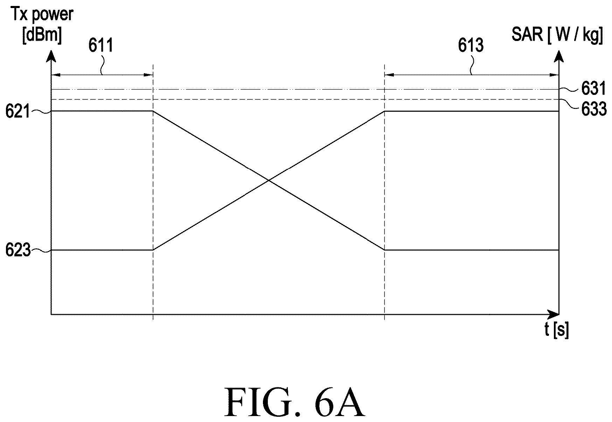

FIG. 6A is a view illustrating changes in an output power value of an electronic device according to an embodiment.

In an embodiment, a first communication module (e.g., the first processor 520 of FIG. 5 or the first antenna corresponding to the first processor 520) performing communication with an external device (e.g., a base station associated with a cellular network) based on a first communication scheme (e.g., cellular network communication) may transmit or receive an RF signal associated with the first communication scheme through at least one antenna included in the communication device (e.g., the electronic device 101 of FIG. 5). A second communication module (e.g., the second processor 530 of FIG. 5 or the second antenna corresponding to the second processor 530) performing communication with an external device (e.g., an access point) based on a second communication scheme (e.g., short-range wireless communication) may transmit or receive an RF signal associated with the second communication scheme through at least one antenna included in the communication device.

Referring to FIG. 6A, in an embodiment, values of the transmission power 621 of the RF signal corresponding to the first communication module and the transmission power 623 of the RF signal corresponding to the second communication module may be changed based on the combined TAS described above with reference to FIG. 5. For example, each of the first communication module and the second communication module may be controlled such that the sum of the first output power value output by the first communication module during the designated time range and the second output power value output by the second communication module during the designated time range does not exceed a set total threshold. In an embodiment, each of the first communication module and the second communication module may be controlled such that the sum 633 (e.g., total average SAR) of the accumulated first SAR value corresponding to the first communication module during the designated time range and the accumulated second SAR value corresponding to the second communication module during the designated time range does not exceed a preset total threshold 631 (e.g., time-average SAR limit or target SAR limit). In an embodiment, controlling the sum 633 of the accumulated SAR values not to exceed the total threshold 631 may include controlling the sum of the average SAR values during a measurement time T not to exceed the maximum value. For example, the maximum value may include an Average SAR LIMIT set corresponding to the antenna group including the first communication module and the second communication module.

In an embodiment, when RF signals respectively corresponding to the plurality of communication modules are output at least simultaneously by at least one antenna of the communication device, the first output power value 621 corresponding to the first communication module and the second output power value 623 corresponding to the second communication module may be distributed within an allowable range to meet the standard associated with the SAR limitation. For example, in a section 611 in which the priority of the communication based on the first communication scheme is higher than the priority of the communication based on the second communication scheme, the first output power value 621 corresponding to the first communication module may be set to be larger than the second output power value 623 corresponding to the second communication module. In a section 613 in which the priority of the communication based on the second communication scheme is higher than the priority of the communication based on the first communication scheme, the second output power value 623 corresponding to the second communication module may be set to be larger than the first output power value 621 corresponding to the first communication module.

According to an embodiment, the section having the higher priority may be set based on a band and/or RAT associated with a specific application. The communication device may enhance the RF signal transmission performance corresponding to the communication module by increasing the transmission power corresponding to the communication module (e.g., the processor or the antenna configured to transmit an RF signal associated with the RAT supported by the processor) supporting the band and/or RAT corresponding to the set application. In an embodiment, conditions respectively corresponding to a plurality of scenarios may be set to provide priority to any one of a plurality of applications. For each of a plurality of scenarios, the transmission power of the signal may be set to differ. When the condition corresponding to the scenario is met, the communication device may provide the priority to the communication module associated with the application corresponding to the scenario, thereby enhancing the transmission performance of the signal corresponding to the communication module to which the priority is assigned. For example, when the priority of a voice call service based on voice over long-term evolution (VoLTE) or voice over new radio (VoNR) is set to be higher than that of other services, the stability of the voice call service may be enhanced by increasing transmission power for a processor (or an antenna connected to the processor) supporting cellular network communication (e.g., LTE network communication or 5G network communication). The communication device may increase the output power value (or the average of the output power values) corresponding to the antenna associated with the identified band, based on identifying the band for the voice call service. When the priority of the voice over Wi-Fi (VoWiFi)-based voice call service is set to be higher than that of other services, the communication device may increase transmission power for a processor (or an antenna connected to the processor) supporting short-range wireless communication.

In an embodiment, when the first communication module is implemented as a cellular processor supporting cellular communication (or an antenna configured to transmit an RF signal associated with the communication scheme supported by the cellular processor), the communication device may enhance transmission performance of the RF signal associated with cellular communication by setting a relatively large value of transmission power distributed to the RF signal associated with cellular communication among allowable total transmission power values in the section 611 in which a high priority of cellular communication is required. When the first communication module is implemented as a Wi-Fi processor supporting Wi-Fi communication (or an antenna configured to transmit an RF signal associated with a communication scheme supported by the Wi-Fi processor), the communication device may enhance transmission performance of the RF signal associated with Wi-Fi communication by setting a relatively large value of transmission power distributed to the RF signal associated with Wi-Fi communication among all allowable transmission power values in the section 613 in which a high priority of Wi-Fi communication is required. In an embodiment, in FIG. 6A, it has been described that the communication device controls output power values corresponding to the two communication modules, but the disclosure is not limited thereto. For example, the communication device may further include a third communication module (e.g., a Bluetooth processor or an antenna configured to transmit an RF signal associated with Bluetooth communication) supporting Bluetooth communication. The communication device may distribute output power values respectively corresponding to the first communication module, the second communication module, and the third communication module to meet the standard associated with the SAR limit.

In an embodiment, as described above with reference to FIG. 5, the combined TAS illustrated in FIG. 6A may be performed by any one processor (e.g., the first processor 520 of FIG. 5) among the plurality of processors based on a physical interface between the plurality of processors.

In an embodiment, the combined TAS may also be performed by a processor (e.g., the application processor 510 of FIG. 5) configured to control the output power values output by the first communication module and the second communication module and electrically connected to the first communication module and the second communication module. For example, when each of the plurality of processors supporting different communication schemes supports the TAS scheme, the application processor may control the first communication module and the second communication module such that the sum of the first output power value output by the first communication module during a designated time range and the second output power value output by the second communication module during a designated time range does not exceed a preset total threshold. According to an embodiment, the time-average spectrum absorption rate (TAS) scheme may include a scheme of measuring an average transmission power (Tx power) and controlling to allow a value corresponding to the measured average transmission power not to exceed an SAR standard (SAR limit). The processor supporting the TAS scheme may control the transmission power output by the antenna corresponding to the processor such that the average of the transmission power does not exceed a power limit (Plimit), based on the Plimit value that should not be exceeded on average for a designated time. Controlling each of a plurality of processors such that the sum of the output power values corresponding to the plurality of processors or the sum of SAR values accumulated due to the operations of the plurality of processors during a designated time period is a total threshold or less is described below with reference to FIG. 7A.

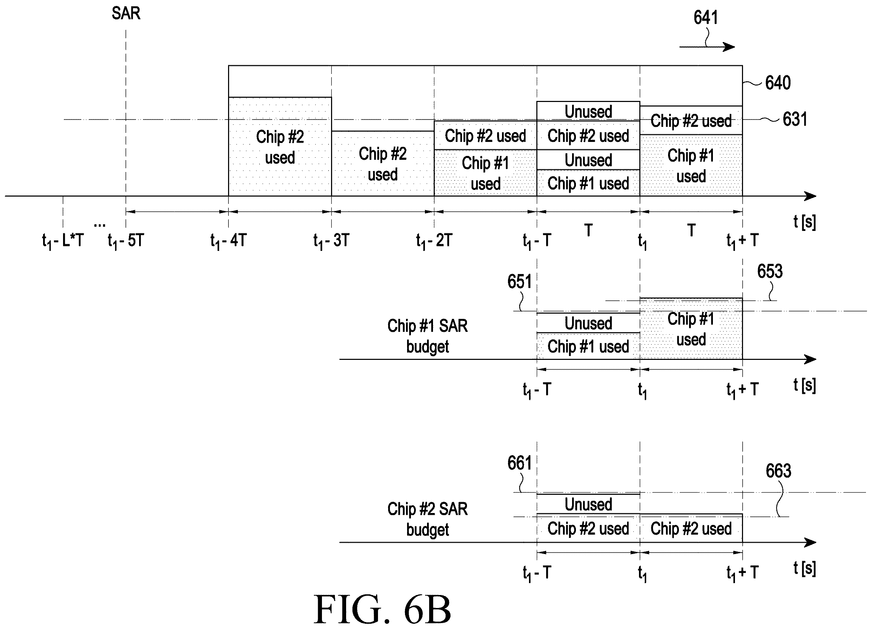

FIG. 6B is a view illustrating a distribution of output power values of an electronic device according to an embodiment.

In an embodiment, any one processor (e.g., the first processor 520) among the plurality of processors included in the communication device (e.g., the electronic device 101 of FIG. 5) may distribute output power values (or Plimits) respectively corresponding to the plurality of processors such that the sum of SAR values consumed by the plurality of processors for a designated time period is maintained below a total threshold 631 (e.g., a time-average SAR limit or a target SAR limit) according to a standard associated with the SAR limit.

In an embodiment, referring to FIG. 6B, the first processor may manage the SAR budget (or SAR distribution amount) distributed to the first processor or the second processor such that the sum of the SAR values accumulated by the first processor (chip#1) and the second processor (chip#2) (or the average of the SARs accumulated during the time period corresponding to the time window 640) is equal to or less than the total threshold 631, based on the time window 640 moving 641 along the time axis. In an embodiment, the first processor may set a maximum value (Tx limit) of the first output power value corresponding to the first processor and the second output power value corresponding to the second processor at the cycle of the time period T. The time period T may be, e.g., tens to hundreds of milliseconds (ms), but is not limited to specific values. In an embodiment, the measurement period corresponding to the first processor may be different from the measurement period corresponding to the second processor. The setting period of the output power value may be set based on at least one of the measurement period corresponding to the first processor or the measurement period corresponding to the second processor. The first processor may manage all SAR values based on the interface between the first processor and the second processor without waking up an AP (e.g., the AP 510 of FIG. 5) having relatively high power consumption, considering that frequent communication between processors may be required because the Tx limit is adjusted in units of relatively short time period T. The first processor may identify the power margin (or the remaining SAR value except for the accumulated SARs in the SAR distribution amount) not used by the second processor through the physical interface (e.g., UART) between the first processor and the second processor. The first processor may identify the power margin not used by the first processor through the TAS module included in the first processor. The first processor may adjust the SAR values distributed to the first processor and the SAR value distributed to the second processor based on the sum of the power margins respectively corresponding to the first processor and the second processor. For example, the first processor may increase the SAR value distributed to the first processor by the power margin corresponding to the second processor. The first processor may increase the SAR distribution amount corresponding to the first processor from the SAR budget 651 for the time period T from time t1-T to time t1 to the SAR budget 653 for the time period T from time t1 to time t1+T. The first processor may reduce the SAR distribution amount corresponding to the second processor from the SAR budget 661 for the time period T from time t1-T to time t1 to the SAR budget 663 for the time period T from time t1 to time t1+T.

In an embodiment, in FIG. 6B, it has been described that the first processor adjusts the SAR budget corresponding to the two processors, but the disclosure is not limited thereto. The first processor (e.g., the TAS module 523 included in the host 521 of FIG. 5) may change the output power values respectively corresponding to the N processors such that a sum of SAR values (or an average of accumulated SARs during a time period corresponding to a time window of the N processors) accumulated by more processors than the two processors, e.g., the N processors, is equal to or less than the total threshold 631.

FIG. 7A is a block diagram illustrating an example electronic device according to an embodiment.

In an embodiment, referring to FIG. 7A, an electronic device 101 (e.g., at least one of the electronic device 101 of FIG. 1, a communication device, or a portable communication device) may include a first processor 520 configured to perform first wireless communication with a first external device based on a first communication protocol, a second processor 530 configured to perform second wireless communication with a second external device based on a second communication protocol, and an AP 510 electrically connected to the first processor 520 and the second processor 530.

In an embodiment, the first processor 520 may identify a parameter associated with a time-average SAR, based on executing the TAS module 523. For example, the first processor 520 may identify the first output power value output by the first processor 520 during the time period corresponding to the first time window or the SAR value (e.g., the average of the SAR values) accumulated due to the transmission operation of the first processor 520 during the time period corresponding to the first time window. The first processor 520 may transmit parameter information associated with the identified time average SAR to the AP 510.

In an embodiment, the second processor 530 may identify a parameter associated with the time average SAR, based on executing the TAS module 703. For example, the second processor 530 may identify the second output power value output by the second processor 530 during the time period corresponding to the second time window or the SAR value (e.g., the average of the SAR values) accumulated due to the transmission operation of the second processor 530 during the time period corresponding to the second time window. The second processor 530 may transmit parameter information associated with the identified time average SAR to the AP 510.

In an embodiment, although not illustrated in FIG. 7A, the electronic device 101 may further include a third processor (not illustrated). When the third processor includes the TAS module, the third processor may transmit a third output power value output by the third processor for a designated time to the AP 510. When the third processor does not include the TAS module, the third processor may transmit the maximum power value output by the third processor to the AP 510.

In an embodiment, the AP 510 may perform communication with the first processor 520 or the second processor 530 through the RIL 511. The AP 510 may identify a first output power value output by the first processor 520 during a designated time range through the signal line 513 between the first processor 520 and the AP 510. The AP 510 may identify the second output power value output by the second processor 530 during a designated time range through the signal line 515 between the second processor 530 and the AP 510.

In an embodiment, the AP 510 may adjust an SAR distribution amount (or a limit value of output power) corresponding to the plurality of processors 520 and 530, based on executing the TAS manager 701. In an embodiment, modules (e.g., the TAS manager 701) implemented (or stored) in the electronic device 101 may be implemented in the form of an application, a program, computer code, instructions, routine, process, software, firmware, or a combination of at least two thereof which is executable by the AP 510. For example, when modules are executed, the AP 510 may perform an operation corresponding to each of the modules. Therefore, when it is described in the disclosure that a "specific module (or service) performs an operation," it may be understood as the "AP 510 performs the operation corresponding to the specific module as the specific module is executed." In an embodiment, at least some of the modules may include, but are not limited to, a plurality of programs. Meanwhile, at least some of the modules may be implemented in a hardware form (e.g., a processing circuit (not shown)). In an embodiment, when the modules are implemented on an Android operating system, the modules may be implemented as a service or an application.

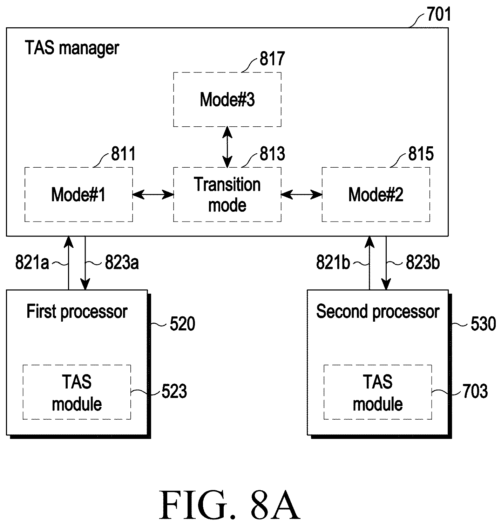

In an embodiment, the AP 510 may control the first processor 520 and the second processor 530 such that the sum of the identified first output power value and the identified second output power value does not exceed a preset total threshold. The TAS manager 701 may identify the state for determining the operation modes of the first processor 520 and the second processor 530, based on the identified first output power value and the identified second output power value. The AP 510 may change a limit value (or Tx limit) of the output power value output by the first processor 520 for a designated time period, based on the state identified by the TAS manager 701. The AP 510 may change a limit value of an output power value output by the second processor 530 for a designated time period. A plurality of operation modes defined by the TAS manager 701 are described below with reference to FIG. 8A.

In an embodiment, controlling the first communication module and the second communication module such that the sum of the first output power value output by the first communication module during the designated time range and the second output power value output by the second communication module during the designated time range does not exceed the preset total threshold may include controlling the first communication module and the second communication module such that the sum of the average of the SARs accumulated during the designated time range corresponding to the first communication module and the average of the SARs accumulated during the designated time range corresponding to the second communication module does not exceed the total threshold. In an embodiment, the first antenna and the second antenna may be included in the same antenna group. The first processor 520 may perform control to allow the first output power value output by the first antenna corresponding to the first processor 520 during a designated time range to be maintained below the limit value of the output power, based on the information including the limit value of the output power received from the AP 510. For example, based on the operation of the TAS module 523, the first processor 520 may control the first antenna (or at least one RF component disposed between the first processor 520 and the first antenna) such that the average of the output power values during the time period corresponding to the time window associated with the first processor 520 is maintained below the limit value of the output power included in the information received from the AP 510. The second processor 530 may perform control to allow the second output power value output by the second antenna corresponding to the second processor 530 during a designated time range to be maintained below the limit value of the output power, based on the information including the limit value of the output power received from the AP 510. In an embodiment, the limit value of the output power set by the AP 510 corresponding to the first processor 520 may be different from the limit value of the output power set by the AP 510 corresponding to the second processor 530. The limit value of the output power corresponding to the first processor 520 may be set to be the same as the limit value of the output power corresponding to the second processor 530 according to the operation modes of the first processor 520 and the second processor 530. For example, based on the operation of the TAS module 703, the second processor 530 may control the second antenna (or at least one RF component disposed between the second processor 530 and the second antenna) such that the average of the output power values during the time period corresponding to the time window associated with the second processor 530 is maintained below the limit value of the output power included in the information received from the AP 510. In an embodiment, when each of the first output power value and the second output power value is maintained below the limit value of the output power received from the AP 510, the sum of the first output power value and the second output power value for the designated time range may not exceed the total threshold.

In an embodiment, when the first processor 520 calculates an average of output power output by the first processor 520 (or the first antenna configured to transmit an RF signal associated with the communication scheme supported by the first processor 520) for the designated time range and controls not to exceed a first limit value based on the calculated average of output power, the first output power value may be an average of output power output by the first processor 520 (or the first antenna). In an embodiment, the first output power value may include a value corresponding to an average of SARs accumulated due to an RF signal radiated by the first antenna. The first limit value may include a limit value of output power set by the AP 510 for the first processor 520. When the second processor 530 calculates an average of output power output by the second processor 530 (or the second antenna configured to transmit an RF signal associated with the communication scheme supported by the second processor 530) for the designated time range and controls not to exceed a second limit value based on the calculated average of output power, the second output power value may be an average of output power output by the second processor 530 (or the second antenna). In an embodiment, the second output power value may include a value corresponding to an average of SARs accumulated due to an RF signal radiated by the second antenna. The second limit value may include a limit value of output power set by the AP 510 for the second processor 530. In an embodiment, the first processor 520 and the second processor 530 may transmit or receive the first RF signal based on the first communication protocol and the second RF signal based on the second communication protocol through at least the same antenna (or antennas belonging to the same antenna group). When each of the first processor 520 and the second processor 530 is implemented to include the TAS modules 523 and 703, the AP 510 may adjust the limit value of the output power of the first processor 520 and the second processor 530 based on the average of the output power.

In FIG. 7A, it has been described that the first processor 520 or the second processor 530 transmits data associated with the transmission state of the first processor 520 or the second processor 530 to the AP 510 based on the operation of the TAS module 523 or 703, but the disclosure is not limited thereto. For example, the first processor 520 or the second processor 530 may not support the SAR management function based on the TAS module. For at least one processor that does not support the SAR management function based on the TAS module, the AP 510 may control to allow the sum of output power values output by the plurality of processors (or averages of SARs accumulated due to the operations of the plurality of processors) to be equal to or less than the total threshold based on the maximum value of the output power value. In an embodiment, when the AP 510 controls to allow the maximum value of the output power output by the first processor 520 not to exceed the first limit value within a designated time range, the first output power value may include the maximum value of the output power output by the first processor 520. The first limit value may include a limit value of output power set by the AP 510 for the first processor 520. When the AP 510 controls to allow the maximum value of the output power output by the second processor 530 not to exceed the second limit value within a designated time range, the second output power value may include the maximum value of the output power output by the second processor 530. The second limit value may include a limit value of output power set by the AP 510 for the second processor 530. Even when the first processor 520 or the second processor 530 is implemented as a chipset that does not include the TAS modules 523 and 703, the AP 510 may control the plurality of processors such that the maximum value of the output power does not exceed a limit value set corresponding to each of the processors.

In an embodiment, when the combined TAS function is performed by the AP 510, even when a plurality of processors provided by different manufacturers are included in the electronic device 101, a total SAR value (or a sum of output power values) corresponding to the plurality of processors may be managed.

In an embodiment, when the combined TAS function is performed by the host processor (e.g., the first processor 520 including the host 521 of FIG. 5), the management function of the total SAR value may be temporarily stopped as the power of the host processor is turned off. The case in which the power of the host processor is turned off may include, e.g., a case in which the host processor enters an airplane mode. When the AP 510 performs the combined TAS function, the risk of deterioration of the stability of the function may be relatively reduced compared to when the combined TAS function is performed by the host processor.

In an embodiment, the AP 510 may identify whether adjustment of the SAR distribution amount is required only when the transmission state of each of the plurality of processors is changed. When the AP 510 performs the combined TAS function, the current consumed may be relatively reduced by controlling each of the plurality of processors as compared to the case where the total SAR value is managed by the host processor.

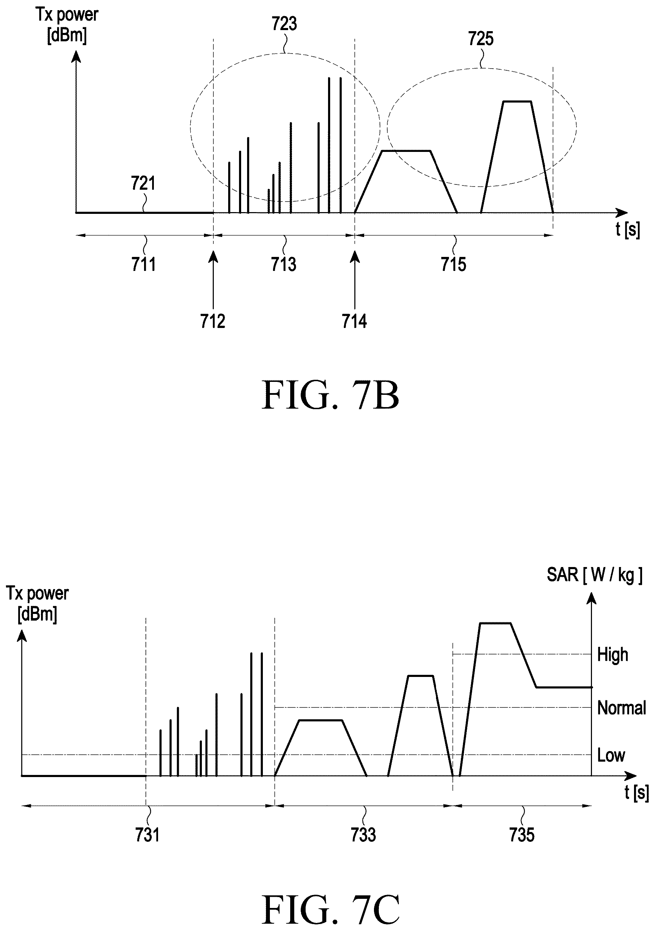

FIG. 7B is a view illustrating a transmission state of a processor of an electronic device according to an embodiment.

In an embodiment, referring to FIG. 7B, a processor (e.g., the first processor 520 and/or the second processor 530 of FIG. 7A) of an electronic device (e.g., the electronic device 101 of FIG. 7A) may have any one of a plurality of transmission states 721, 723, and 725 corresponding to a plurality of operation scenarios. For example, the processor may maintain a no Tx state 721 during a first time period 711. The no Tx state 721 may correspond to a state in which TX is not possible, e.g., a state in which the processor is turned off or a state in which an antenna not associated with the transmission antenna used by other processors is used. In an embodiment, the no Tx state 721 may include a state in which there is no substantial data transmission or a state in which there is no transmission of an additional signal (e.g., a reference signal) other than data.

In an embodiment, the processor may transition to a discontinuous TX available state 723 at the first time 712. The processor may maintain the discontinuous Tx state 723 during a second time period 713. The discontinuous Tx state 723 may be, e.g., a state in which a non-regular Tx operation is performed by the processor based on a relatively low duty cycle. The discontinuous Tx state 723 may correspond to a state in which the communication processor performs at least one of an RRC idle state, an RACH procedure, or a TAU update procedure. The discontinuous Tx state 723 may correspond to a state in which a Wi-Fi processor performs at least one of an STA active search procedure, a P2P communication procedure, or a NAN discovery procedure.

In an embodiment, the processor may transition to a continuous TX available state 725 at the second time 714. The processor may maintain the continuous Tx state 725 during the third time period 715. The continuous Tx state 725 may correspond to, e.g., a state in which the Tx operation is relatively highly likely to be performed continuously. In the case of the communication processor, the continuous Tx state 725 may correspond to the RRC connected state. In the case of the Wi-Fi processor, the continuous Tx state 725 may correspond to the STA/P2P connection state, the soft access point state, and/or the NAN communication activated state.

In an embodiment, the processor may transmit information (or a flag) associated with the transmission state to a processor (e.g., the AP 510 of FIG. 7A) supporting the combined TAS. The processor supporting the combined TAS may enhance the transmission performance of the processor corresponding to the continuous Tx state based on reducing the SAR distribution amount (or target SAR limit) for the processor corresponding to the no Tx state or the discontinuous Tx state. According to an embodiment, in the discontinuous period, the number of transmissions or a power consumption event for transmission may be relatively reduced compared to the continuous period. When the SAR distribution amount for the processor corresponding to the no Tx state or the discontinuous Tx state is reduced, the output power value (or the average of the accumulated SARs) for a designated time range corresponding to the processor is relatively reduced, and an unused SAR value in the SAR distribution amount set corresponding to the processor may be identified. The processor supporting the combined TAS may distribute unused SAR values for another processor in the continuous state, thereby enhancing transmission performance of the processor in the continuous state.

In an embodiment, when the transmission state is changed, the first processor (e.g., the first processor 520 of FIG. 7A) or the second processor (e.g., the second processor 530 of FIG. 7A) may transmit information associated with the transmission state to the AP 510. When the AP 510 receives information related to the transmission state from the first processor or the second processor, the AP 510 may transition from the sleep state to the wake-up state. In an embodiment, when communication between processors is performed based on information associated with the transmission state, the frequency of communication between processors is reduced, and thus current consumed by each of the processors included in the electronic device 101 may be reduced.

FIG. 7C is a view illustrating a setting of an output power value for a processor of an electronic device according to an embodiment.

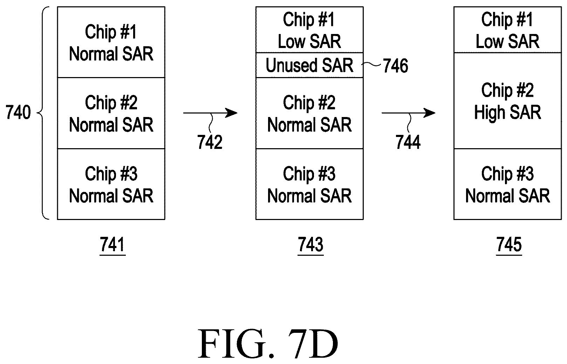

In an embodiment, referring to FIG. 7C, the electronic device 101 may set the SAR distribution amount corresponding to the processor (or the limit of the average of the SARs accumulated during the time period corresponding to the time window of the processor) to a low level during the time period 731 corresponding to the no Tx state or the discontinuous Tx state. The SAR distribution amount may be an SAR value distributed for any one processor from the maximum value of the SAR value generated due to operations of the plurality of processors for a designated time. The electronic device 101 may set a limit value (Tx limit) of the output power value output by the processor (or an antenna configured to transmit an RF signal associated with a communication scheme supported by the processor) to a low level for a designated time. For example, the electronic device 101 may set an SAR distribution amount associated with cellular communication to the value corresponding to the low level. The electronic device 101 may set the SAR distribution amount associated with Wi-Fi communication to a value corresponding to the low level. The electronic device 101 may set the SAR distribution amount corresponding to the processor to a normal level during the time period 733 corresponding to the continuous Tx state. For example, the electronic device 101 may set an SAR distribution amount associated with cellular communication to the value corresponding to the normal level. The electronic device 101 may set the SAR distribution amount associated with Wi-Fi communication to a value corresponding to the normal level. The electronic device 101 may set the SAR distribution amount corresponding to the processor to a high level during the time period 735 corresponding to the continuous Tx state. For example, the electronic device 101 may set an SAR distribution amount associated with cellular communication to the value corresponding to the high level. The electronic device 101 may set the SAR distribution amount associated with Wi-Fi communication to a value corresponding to the high level. When it is required to adjust the SAR distribution amount for a specific processor among the plurality of processors, the electronic device 101 may change the SAR distribution amount corresponding to the specific processor to the high level by reducing the SAR distribution amount corresponding to the other processor. For example, the value set corresponding to the low level may include a value corresponding to a low target SAR. The value set corresponding to the normal level may include a value corresponding to an intermediate target SAR. The value set corresponding to the high level may include a value corresponding to a high target SAR. In an embodiment, because the target SAR corresponding to the processor is set to be low, an unused SAR value identified by the processor supporting the combined TAS may be distributed for another processor that is highly likely to perform continuous communication. The electronic device 101 may have a technical effect of enhancing transmission performance by increasing a target SAR corresponding to a processor that is highly likely to perform continuous communication. Unused SAR margin is described below with reference to FIG. 7D.

In an embodiment, the plurality of processors included in the electronic device may support the TAS protocol. The AP may set a limit value (e.g., Tx limit or target SAR limit) corresponding to each of the plurality of processors based on at least a portion of the TAS protocol for each of the plurality of processors.

In an embodiment, each of the first output power value corresponding to the first processor or the second output power value corresponding to the second processor may correspond to a plurality of different preset values, based on a change in the output power value output by the first processor and/or the second processor according to the transmission states of the first processor and the second processor. The plurality of different values corresponding to each of the first output power value or the second output power value may be set based on an output value margin between a sum of the first and second output power values and the total threshold.

In an embodiment, a target SAR mode may be defined, corresponding to the transmit state of the processor. The target SAR modes may be divided into, e.g., a high power mode, a normal mode, or a low power mode.

In an embodiment, the target SAR limit corresponding to the normal mode may be defined as Equation 1.

[Equation 1]

$$SAR\ Limit_{Normal} = \frac{SAR\ Limit_{Total}}{Tx\ chipset\ number\ of\ SAR} \pm \Delta$$

In an embodiment, the target SAR limit corresponding to the normal mode may be expressed as a ratio of the total SAR limit and the number of processors. The unit of target SAR limit may be W/kg. The target SAR limit corresponding to the normal mode may be a value ratio-adjusted from the total SAR value allowed by the electronic device 101 when the constant $\Delta$ in Equation 1 is not 0.

In an embodiment, the target SAR limit corresponding to the high power mode may be defined as Equation 2.

[Equation 2]

$$SAR\ Limit_{High} = SAR\ Limit_{Normal} + \alpha$$

The target SAR limit corresponding to the high power mode may be set to be a designated value a larger than the target SAR limit corresponding to the normal mode.

In an embodiment, the target SAR limit corresponding to the low power mode may be defined as Equation 3.

[Equation 3]

$$SAR\ Limit_{Low} = SAR\ Limit_{Normal} - \beta$$

The target SAR limit corresponding to the low power mode may be set to be a designated value b smaller than the target SAR limit corresponding to the normal mode. In an embodiment, for the plurality of processors included in the electronic device 101, the increments of $\Delta$, a, and b need to be equal to or less than 0 to prevent violation of SAR-related standards. For example, when the total SAR value needs to meet about 1.7 W/kg, assuming that $\Delta$ is 0 W/kg, a is 0.35 W/kg, and b is 0.35 W/kg, the target SAR limit corresponding to the high power mode corresponding to the first processor or the second processor, the target SAR limit corresponding to the normal mode, and the target SAR limit corresponding to the low power mode may be set to 1.2 W/kg, 0.85 W/kg, and 0.5 W/kg, respectively.

Table 4 shows an example of a state combination of the first processor (chip#1) and the second processor (chip#2) when the total threshold of the combined TAS is set to about 1.7 W/kg.

[Table 4]

| Status combination | | Chip#1 | | |
|---|---|---|---|---|
| | | High (1.2) | Normal (0.85) | Low (0.5) |
| Chip#2 | High (1.2) | 2.4 (Not allowed) | 2.05 (Not allowed) | 1.7 (allowed) |
| | Normal (0.85) | 2.05 (Not allowed) | 1.7 (allowed) | 1.35 (allowed) |
| | Low (0.5) | 1.7 (allowed) | 1.35 (allowed) | 1 (allowed) |

In Table 4, it is described that the SAR values consumed by the plurality of processors should meet the total SAR limit (e.g., about 1.7 W/kg, but is not limited thereto). In an embodiment, when the increments of $\Delta$, a, and b are equal to 0 (e.g., $\Delta$ +a - b = 0), the allowed state combination of the first processor and the second processor may be Normal + Normal, Low + High, or High + Low. In an embodiment, when the increments of $\Delta$, a, and b are less than 0 (e.g., $\Delta$ +a - b < 0), the allowed state combination of the first processor and the second processor may be Normal + Low, Low + Normal, or Low + Low.

In an embodiment, when the target SAR limit corresponding to the case where the increments of $\Delta$, a, and b are larger than 0 (e.g., $\Delta$ +a - b >0) is set, the SAR-related standard may be violated. For example, state combinations High+High, High+Normal, or Normal+High may not be allowed.

In an embodiment, the target SAR modes defined corresponding to the transmission states of the processor may be classified into more than three types. For example, the target SAR modes defined corresponding to the transmission states of the first processor may be classified into M. The target SAR modes defined corresponding to the transmission states of the second processor may be classified into N.

Table 5 shows an example of a state combination of the first processor (chip#1) and the second processor (chip#2) when M is 5 and N is 4, and the total threshold of the combined TAS is set to about 1.7 W/kg.

[Table 5]

| Status combination | | Chip#1 | | | | |
|---|---|---|---|---|---|---|
| | | Status #1 (1.2) | Status #2 (1.0) | Status #3 (0.85) | Status #4 (0.7) | Status #5 (0.5) |
| Chip#2 | Status #1 (1.2) | 2.4 (not allowed) | 2.2 (not allowed) | 2.05 (not allowed) | 1.9 (not allowed) | 1.7 |
| | Status #2 (1.0) | 2.2 (not allowed) | 2 (not allowed) | 1.85 (not allowed) | 1.7 | 1.5 |
| | Status #3 (0.7) | 1.9(not allowed) | 1.7 | 1.55 | 1.4 | 1.2 |
| | Status #4 (0.5) | 1.7 | 1.5 | 1.35 | 1.2 | 1 |

In the example of Table 5, it may be described that different target SAR limits may be set corresponding to a plurality of states of different processors. In an embodiment, the target SAR limit corresponding to each of the plurality of processors set corresponding to the allowed state combination may be stored in memory (e.g., the memory 130 of FIG. 1). FIG. 7D is a view illustrating changes in output power values for a plurality of processors of an electronic device according to an embodiment.

In an embodiment, the electronic device may include a first processor, a second processor, and a third processor. The AP may control the first processor, the second processor, and the third processor such that the sum of the output power values corresponding to the first processor, the second processor, and the third processor does not exceed a total threshold.

In an embodiment, referring to FIG. 7D, the electronic device 101 may adjust the SAR distribution amount corresponding to each of the plurality of processors such that the total SAR value corresponding to the plurality of processors does not exceed the total threshold 740. For example, the AP (the AP 510 of FIG. 7A) may manage the SAR distribution amount corresponding to the plurality of processors based on executing the TAS manager (e.g., the TAS manager 701 of FIG. 7A).

In an embodiment, referring to reference numeral 741, the AP may equally configure an SAR distribution amount corresponding to the first processor, an SAR distribution amount corresponding to the second processor, and an SAR distribution amount corresponding to the third processor. In an embodiment, the AP may identify that a continuous transmission operation may be performed by the second processor, based on the data associated with the transmission state received from the second processor. The AP may change (742) the SAR distribution amounts corresponding to at least two of the first processor, the second processor, or the third processor, based on identifying that the SAR distribution amount needs to be adjusted.

In an embodiment, referring to reference numeral 743, the AP may identify the SAR margin 746 resultant from excluding the average of the accumulated SAR corresponding to the time window of the first processor from the target SAR limit distributed corresponding to the first processor, based on the data associated with the transmission state received from the first processor. The AP may secure an unused SAR margin 746 by reducing the SAR distribution amount corresponding to the first processor. While the SAR distribution amount corresponding to the first processor is reduced, the AP may equally maintain the SAR distribution amount corresponding to the second processor and the SAR distribution amount corresponding to the third processor. The AP may change (744) the SAR distribution amount based on identifying that the average of the SAR accumulated due to the transmission operation of the first processor is less than the target SAR limit corresponding to the low level.

In an embodiment, referring to reference numeral 745, the AP may allocate an SAR distribution amount corresponding to the SAR margin to the second processor. The AP may increase the SAR distribution amount corresponding to the second processor to a value larger than the SAR distribution amount corresponding to the first processor, thereby enhancing the performance of the transmission operation performed by the second processor.

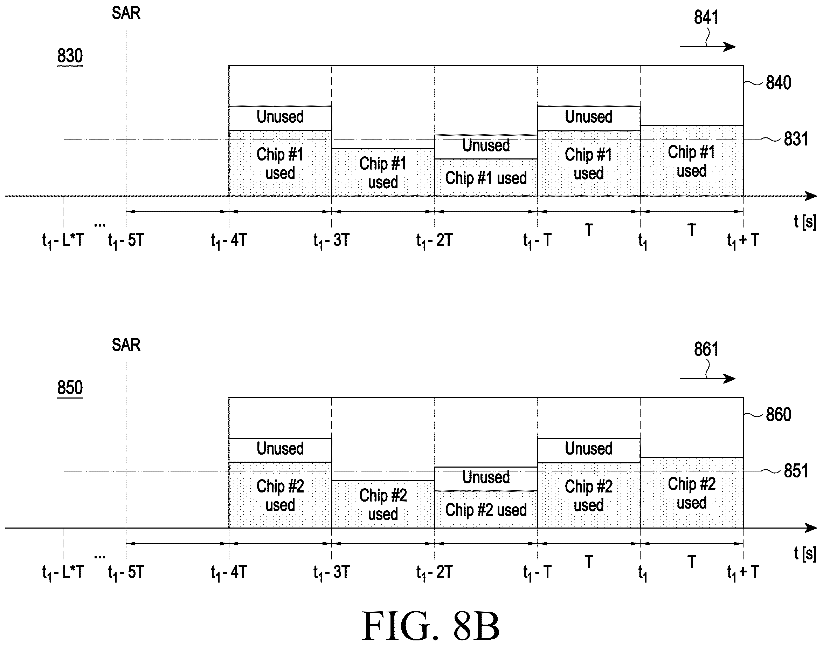

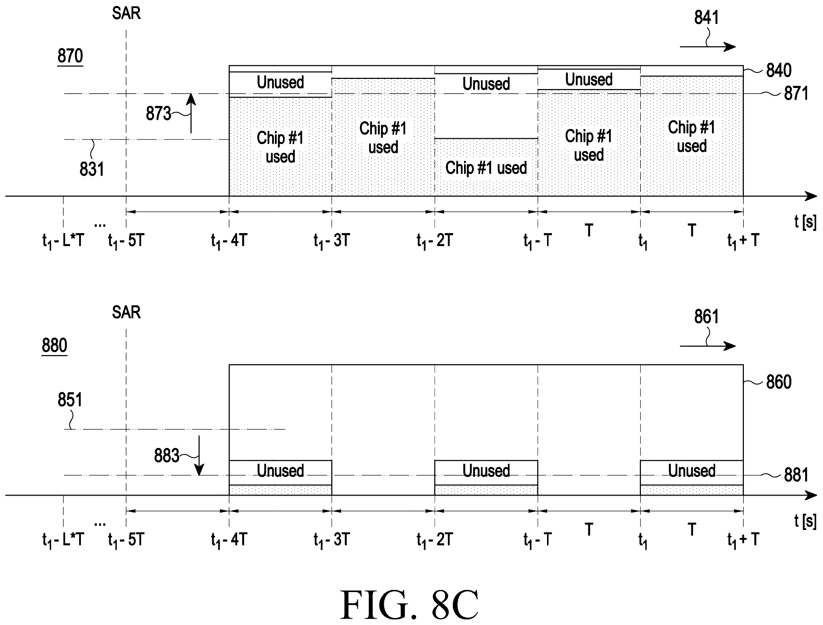

FIG. 8A is a view illustrating changes in output power values for a plurality of processors of an electronic device according to an embodiment. The embodiment of FIG. 8A is described with reference to FIGS. 8B and 8C. FIG. 8B is a view illustrating a distribution of output power values for a plurality of processors of an electronic device according to an embodiment. FIG. 8C is a view illustrating a distribution of output power values for a plurality of processors of an electronic device according to an embodiment.

In an embodiment, the AP (e.g., the AP 510 of FIG. 7A) may transmit (823a, 823b) or receive (821a, 821b) information with the processor of the electronic device through a signal line between the AP and the processor. The TAS manager 701 of the AP may receive, e.g., an output power value output by the first processor 520 for a designated time.

The TAS manager 701 may receive an output power value output by the second processor 530 for a designated time. The TAS manager 701 (or status controller) may determine any one of the plurality of preset operation modes 811, 813, 815, and 817, based on the received data.

In an embodiment, data associated with the transmission state may be received from the first processor 520. The TAS manager 701 may receive data associated with the transmission state from the second processor 530. The TAS manager 701 may identify a processor requiring a continuous transmission operation, based on data associated with the transmission state. The TAS manager 701 may adjust the SAR distribution amount (or output power value) for a processor requiring a higher output power value within a range in which the sum of the SAR values corresponding to the plurality of processors does not exceed the total threshold.

In an embodiment, referring to FIG. 8B, while both the first processor 520 and the second processor 530 are turned on, the TAS manager 701 may determine the operation state as the balance mode (e.g., the first mode 811), based on the transmission state corresponding to the first processor 520 and the transmission state corresponding to the second processor 530.

In an embodiment, referring to reference numeral 830, the TAS manager 701 may set a target SAR limit 831 corresponding to the normal mode for the first processor 520. Based on the computation of the TAS module 523, the first processor 520 may operate such that the average of the SAR accumulated by the first processor 520 during the time period corresponding to the time window 840 moving 841 along the time axis does not exceed the target SAR limit 831 corresponding to the normal mode. For example, an average of an SAR value (chip#1 used) accumulated by the first processor 520 during a time period from t1-4T to t1-3T, an SAR value accumulated by the first processor 520 during a time period from t1-3T to t1-2T, an SAR value accumulated by the first processor 520 during a time period from t1-2T to t1-T, an SAR value accumulated by the first processor 520 during a time period from t1-T to t1, and an SAR accumulated by the first processor 520 during a time period from t1 to t1+T may not exceed the target SAR limit 831 corresponding to the normal mode.

In an embodiment, referring to reference numeral 850, the TAS manager 701 may set a target SAR limit 851 corresponding to the normal mode for the second processor 530. Based on the computation of the TAS module 703, the second processor 530 may operate such that the average of the SAR accumulated by the second processor 530 during the time period corresponding to the time window 860 moving 861 along the time axis does not exceed the target SAR limit 851 corresponding to the normal mode. For example, an average of an SAR value (chip#2 used) accumulated by the second processor 530 during a time period from t1-4T to t1-3T, an SAR value accumulated by the second processor 530 during a time period from t1-3T to t1-2T, an SAR value accumulated by the second processor 530 during a time period from t1-2T to t1-T, an SAR value accumulated by the second processor 530 during a time period from t1-T to t1, and an SAR accumulated by the second processor 530 during a time period from t1 to t1+T may not exceed the target SAR limit 851 corresponding to the normal mode.

In an embodiment, the time period corresponding to the time window 840 associated with the first processor 520 (Chip#1) and the time period corresponding to the time window 860 associated with the second processor 530 may be different from each other. The detailed operation method of the first processor 520 or the second processor 530 (Chip#2) described above in FIG. 8B may be changed according to implementation. The first processor 520 may operate such that the average of the SAR accumulated by the first processor 520 does not exceed the set target SAR limit 831, and the second processor 530 may operate such that the average of the SAR accumulated by the second processor 530 does not exceed the set target SAR limit 851. According to an embodiment, detailed instructions to enable the TAS module of the first processor and the TAS module of the second processor to operate may be different from each other. In an embodiment, as the first processor and the second processor operate based on a time-average SAR (TAS) scheme, the total SAR value corresponding to the plurality of processors may meet the SAR-related standard. In an embodiment, the target SAR limits 831 and 851 may be set to the same value when the operation mode corresponding to the processors is determined to be the balance mode.

In an embodiment, referring to FIG. 8C, the TAS manager 701 may determine the operation mode to be the second mode 815 (e.g., chip#1 high power mode), based on identifying that the transmission state corresponding to the first processor 520 is the state in which the continuous transmission operation is performed and the transmission state corresponding to the second processor 530 is the idle state.

In an embodiment, referring to reference numeral 870, the TAS manager 701 may set a target SAR limit 871 corresponding to the high power mode for the first processor 520. The target SAR limit 871 corresponding to the high power mode may be set to a value larger than the target SAR limit 831 corresponding to the normal mode by a predetermined value 873 (e.g., value a). Based on the operation of the TAS module 523, the first processor 520 may operate such that the average of the sum of the SAR values accumulated by the first processor 520 during the time period corresponding to the time window 840 moving 841 along the time axis does not exceed the target SAR limit 871 corresponding to the high power mode.

In an embodiment, referring to reference numeral 880, the TAS manager 701 may set a target SAR limit 881 corresponding to the low power mode for the second processor 530. The target SAR limit 881 corresponding to the low power mode may be set to a value smaller than the target SAR limit 851 corresponding to the normal mode by a predetermined value 883 (e.g., value b). In an embodiment, as the output power value output by the first processor 870 for a designated time increases, the quality of the transmission signal associated with the communication scheme supported by the first processor 870 may be enhanced.

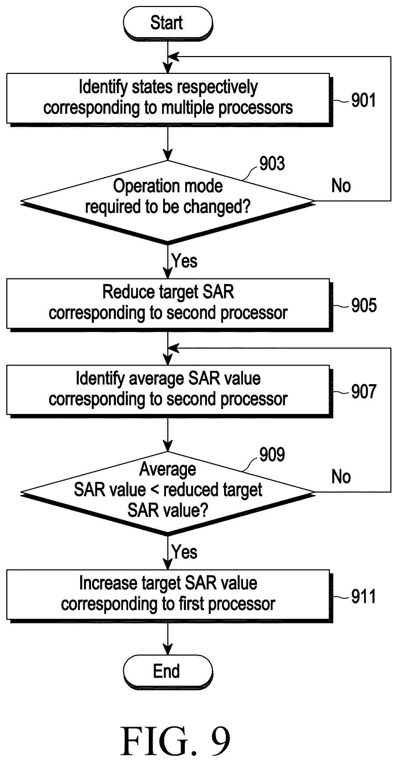

FIG. 9 is a flowchart illustrating an operation method of an electronic device according to an embodiment.

According to an embodiment, the electronic device 101 (e.g., at least one of the processor 120 of FIG. 1, the application processor 510 of FIG. 5, or the application processor 510 of FIG. 7A) may identify states respectively corresponding to the plurality of processors in operation 901. The electronic device 101 may identify a transmission state corresponding to each of the plurality of processors included in the electronic device 101. In an embodiment, when the electronic device 101 controls to allow the sum of the output power values output by the two processors not to exceed the total threshold, the electronic device 101 may identify the transmission state of each of the first processor (e.g., the first processor 520 of FIG. 7A) and the second processor (e.g., the second processor 530 of FIG. 7A). In an embodiment, the processor (e.g., the processor 120 of FIG. 1) may control the first communication module (e.g., the first antenna corresponding to the first processor) and the second communication module such that the sum of the first output power value output by the first communication module (e.g., the first antenna) during a designated time range and the second output power value output by the second communication module (e.g., the second antenna corresponding to the second processor) during the designated time range does not exceed a designated total threshold. For example, the AP 510 of FIG. 7A may control the first communication module and the second communication module such that the sum of the first output power value and the second output power value does not exceed a preset total threshold. According to implementation, the first processor 520 of FIG. 5A may control the first communication module and the second communication module such that the sum of the first output power value and the second output power value does not exceed a preset total threshold. In an embodiment, the AP may control the first communication module and the second communication module such that the first output power value corresponds to a first value and the second output power value corresponds to a second value. The first value may include a value corresponding to the normal level set as the limit of the first output power value. The second value may include a value corresponding to the normal level set as the limit of the second output power value. In an embodiment, when the TAS module is included in the first processor or the second processor, the first output power value or the second output power value may include an average. For example, in case that at least one of the first communication module or the second communication module calculates an average of output power output by the first communication module or the second communication module during the designated time range, and controls not to exceed a first limit value or a second limit value which is an output limit value of the first communication module or the second communication module based on the calculated average of the output power, the first output power value or the second output power value may include the average. In an embodiment, when the TAS module is not included in the first processor or the second processor, the first output power value or the second output power value may include a maximum value. For example, in case that at least one of the first communication module or the second communication module controls such that a maximum value of output power output by the first communication module or the second communication module does not exceed a first threshold or a second threshold that is an output limit value of the first communication module or the second communication module within the designated time range, the first output power value or the second output power value may include the maximum value. The transmission state of the processor may be, e.g., any one of the no Tx state, the discontinuous Tx state, or the continuous Tx state. For example, the AP may receive first data associated with a state corresponding to the first communication module from the first communication module. The first data associated with the state corresponding to the first communication module may include data associated with the transmission state of the first processor. The AP may receive the second data associated with the state corresponding to the second communication module from the second communication module. The second data associated with the state corresponding to the second communication module may include data associated with the transmission state of the second processor. In an embodiment, the first output power value or the second output power value each may have a plurality of preset different values corresponding to a change in output power corresponding to a context of the first communication module or the second communication module. The plurality of different values corresponding to each of the first output power value or the second output power value may be set based on an output value margin between a sum of the first and second output power values and the total threshold. For example, when the limit of the first output power value and the limit of the second output power value each have values corresponding to the normal level, a predetermined output value margin may be secured such that the sum of the first output power value and the second output power value does not exceed the total threshold. When the limit of the first output power value has a value corresponding to the low level and the limit of the second output power value has a value corresponding to the high level, a predetermined output value margin may be secured such that the sum of the first and second output power values does not exceed the total threshold. When the limit of the first output power value has a value corresponding to the high level and the limit of the second output power value has a value corresponding to the low level, a predetermined output value margin may be secured such that the sum of the first and second output power values does not exceed the total threshold. The electronic device 101 may control the first communication module and the second communication module such that the first output power value or the second output power value does not exceed any one of a plurality of preset different values including the value corresponding to the low level, the value corresponding to the normal level, and the value corresponding to the high level. In an embodiment, the AP (e.g., the AP 510 of FIG. 7A) may control the first communication module and the second communication module such that a sum of an accumulated first SAR value corresponding to the first communication module during the designated time range and an accumulated second SAR value corresponding to the second communication module during the designated time range does not exceed a preset total threshold. In an embodiment, the accumulated first SAR value may include an average of the accumulated SAR. The accumulated second SAR value may include an average of the accumulated SAR. In an embodiment, when the electronic device 101 controls to allow the sum of the output power values output by the three processors not to exceed the total threshold, the electronic device 101 may identify the transmission state of each of the first processor, the second processor, and the third processor. For example, the AP may control the first communication module to the third communication module such that the sum of the output power values of the first to third communication modules does not exceed a total threshold. For example, the electronic device may identify the transmission state of each of the first processor, the second processor, and the third processor when controlling such that in addition to the sum of the output values, the average of the output power value or the average of the accumulated SAR do not exceed the threshold SAR.

In an embodiment, in operation 903, the electronic device 101 may identify whether it is necessary to change the operation mode. The electronic device 101 may identify whether to change at least one of the first output power value or the second output power value, based on at least one of the first data or the second data. The AP may identify whether to increase or decrease the first output power value corresponding to the first processor or the second output power value corresponding to the second processor, based on the first data including data associated with the transmission state of the first processor or the second data including data associated with the transmission state of the second processor. In an embodiment, the first communication module and the second communication module may transmit or receive a first RF signal based on the first communication protocol and a second RF signal based on the second communication protocol, through at least the same antenna. The first antenna corresponding to the first processor configured to transmit or receive the first RF signal may be included in the same antenna group as the second antenna corresponding to the second processor configured to transmit or receive the second RF signal. Based on identifying that the state corresponding to the first communication module is a state requiring a relatively high output power value, the AP may identify whether the state corresponding to the second communication module is a state requiring a relatively low output power value. For example, based on identifying that the transmission state of the first processor is the continuous Tx state, the AP may identify whether the transmission state of the second processor is not the continuous Tx state. The AP may control the second communication module such that a limit value of the second output power value corresponds to a fourth value smaller than the second value, based on identifying that the state corresponding to the second communication module is the state in which the relatively low output power value is required. The AP may identify whether an average of the second output power value corresponding to a time period designated in association with the second communication module is the fourth value or less. For example, when the TAS module is included in the second processor, the AP may identify whether the average of the second output power value is less than or equal to the fourth value, based on the information associated with the average of the output power (or the average of the accumulated SAR) received from the second processor. The fourth value may include, e.g., a value corresponding to the low level set as the limit of the second output power value. The AP may control the first communication module such that a limit value of the first output power value corresponds to a third value larger than the first value before the time period designated in association with the second communication module elapses from a time when the limit value of the second output power value is changed, based on identifying that the average of the second output power value is the fourth value or less. The third value may include, e.g., a value corresponding to the high level set as the limit of the first output power value. Based on comparing the output power value corresponding to the second communication module with the fourth value, the AP may increase the limit value of the output power value corresponding to the first communication module before the time period corresponding to the time window designated in association with the second communication module elapses. For example, based on identifying that the transmission state of the first processor is the continuous Tx state and the transmission state of the second processor is not the continuous Tx state, the AP may identify that the operation mode of the TAS manager (e.g., the TAS manager 701 of FIG. 7A) is required to be changed. For example, the TAS manager may identify that it is required to change the operation mode from a balance mode in which the output power value corresponding to the total SAR value for a designated time is relatively evenly distributed to each of the first processor and the second processor to a first processor high power mode in which a relatively higher output power value is distributed to the first processor. The electronic device 101 may identify that the target SAR value corresponding to each of the first processor and the second processor is required to be changed such that the first output power value output by the first processor for a designated time is larger than the second output power value output by the second processor for a designated time. In an embodiment, when the operation mode of the TAS manager determined by the transmission state corresponding to each of the plurality of processors is the same as the current operation mode, the electronic device 101 may identify that the operation mode is not required to be changed. In an embodiment, based on identifying that the operation mode is not required to be changed (No in operation 903), the electronic device 101 may periodically identify states respectively corresponding to the plurality of processors.

In an embodiment, based on identifying that the operation mode is required to be changed (Yes in operation 903), in operation 905, the electronic device 101 may reduce the target SAR value corresponding to the second processor. For example, the target SAR value corresponding to the second processor may be set to any one of a target SAR value (e.g., target SAR limit) corresponding to the high power mode, a target SAR value corresponding to the normal mode, or a target SAR value corresponding to the low power mode. In an embodiment, when the transmission state of the second processor corresponds to the no Tx state or the discontinuous Tx state, the second processor may be identified as a processor that is not required to increase the distribution amount of the SAR. In an embodiment, the electronic device 101 may reduce the first output power value corresponding to the first communication module and increase the second output power value corresponding to the second communication module, based on a transition margin on a time axis. For example, based on identifying that the transmission state of the second processor is the no Tx state or the discontinuous Tx state, the AP may reduce the target SAR value corresponding to the second processor from the target SAR value corresponding to the normal mode to the target SAR value corresponding to the low power mode, thereby securing a transition margin (or an unused SAR margin) on the time axis.

In an embodiment, in operation 907, the electronic device 101 may identify an average SAR value corresponding to the second processor. In an embodiment, the second processor may provide an application programming interface (API) associated with the current average SAR value. Based on identifying the average SAR value corresponding to the second processor, the electronic device 101 may identify whether it is possible to immediately increase the target SAR value corresponding to the first processor.

In an embodiment, in operation 909, the electronic device 101 may identify whether the identified average SAR value is less than the target SAR value reduced by operation 905. The electronic device 101 may identify whether the average SAR value calculated based on the time window for the second processor is less than the reduced target SAR value according to the setting of the TAS manager. Based on identifying that the average SAR value is less than the reduced target SAR value, the electronic device 101 may identify that the target SAR value corresponding to the first processor may be immediately increased. Based on identifying that the average SAR value is larger than or equal to the reduced target SAR value, the electronic device 101 may identify that a waiting time for increasing the target SAR value corresponding to the first processor is required. Based on identifying that the average SAR value is larger than or equal to the reduced target SAR value (No in operation 909), the electronic device 101 may identify the average SAR value corresponding to the second processor at a designated period.

In an embodiment, based on identifying that the identified average SAR value is less than the reduced target SAR value (Yes in operation 909), in operation 911, the electronic device 101 may increase the target SAR value corresponding to the first processor. The electronic device 101 may identify the SAR margin by reducing the target SAR value corresponding to the second processor. The electronic device 101 may increase the target SAR value corresponding to the first processor corresponding to the identified SAR margin, thereby enhancing the transmission performance of communication supported by the first processor.

In an embodiment, the electronic device 101 may control the operations of a plurality of processors using a TAS manager implemented as at least a portion of an AP, thereby performing a general-purpose combined TAS function even when a plurality of processors having different manufacturers are included in the electronic device 101.

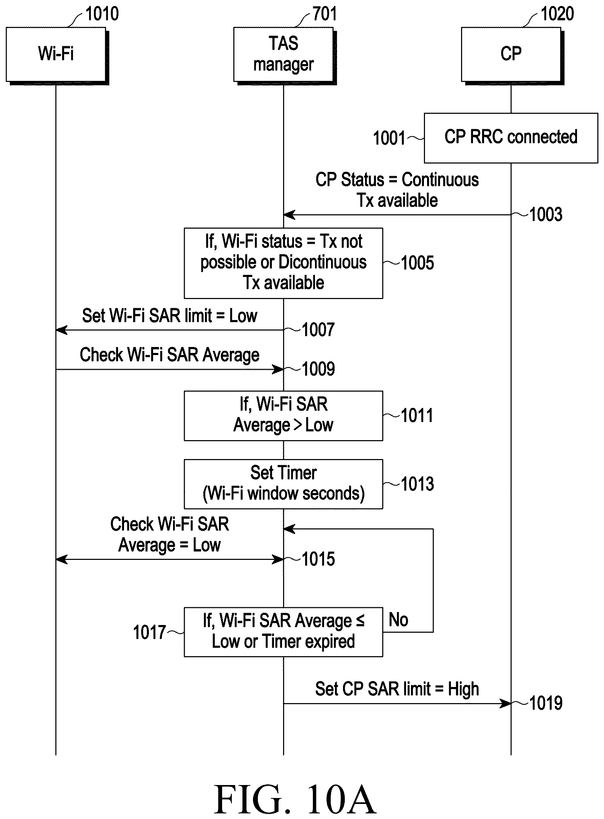

FIG. 10A is a flowchart illustrating an operation method of an electronic device according to an embodiment.

In an embodiment, the communication processor 1020 (e.g., at least one of the auxiliary processor 123 of FIG. 1, the first communication processor 212 or the second communication processor 214 of FIG. 2A, or the integrated communication processor 260 of FIG. 2B) may transition to the RRC connected state in operation 1001. The communication processor 1020 may transmit or receive a signal to or from the communication network via at least one antenna included in the electronic device (e.g., the electronic device 101 of FIG. 7A). The communication processor 1020 may be included in, e.g., a cellular communication module.

In an embodiment, based on performing an RRC connection procedure with the communication network, the communication processor 1020 may transmit data (or a flag) associated with the transmission state of the communication processor 1020 to the TAS manager 701 in AP 510 (or a processor disposed outside the communication processor and the Wi-Fi processor) in operation 1003. The communication processor 1020 may transmit, e.g., data associated with the continuous Tx state to the TAS manager 701 in AP 510. The continuous Tx state may be, e.g., a state requiring a relatively high output power value. The TAS manager 701 in AP 510 may identify the first output power of the cellular communication module in association with cellular communication between the cellular communication module and the first external electronic device. The first external electronic device may include, e.g., a cellular communication network (or a base station). For example, the TAS manager 701 in AP 510 may identify the first output power of the cellular communication module based on reception of the data associated with the transmission state from the communication processor 1020. The first output power may include, e.g., an average of an output power value output in association with cellular communication during a designated time range. The first output power may include an average of SAR values accumulated due to transmission of an RF signal associated with cellular communication during a designated time range.

In an embodiment, based on receiving the data associated with the continuous Tx state from the communication processor 1020, the TAS manager 701 in AP 510 may identify that it is required to change the operation mode to the communication processor (CP) high power mode. The TAS manager 701 in AP 510 may identify that it is required to change the operation mode from the balance mode (or the default mode) to the communication processor high power mode, based on requiring that the transmission operation be continuously performed by the communication processor 1020.

In an embodiment, in operation 1005, the TAS manager 701 in AP 510 may identify whether the transmission state of the Wi-Fi processor 1010 is the continuous Tx state (e.g., continuous Tx available) based on communication with the Wi-Fi processor 1010. The Wi-Fi processor 1010 may be, e.g., a non-cellular wireless communication module. The TAS manager 701 in AP 510 may identify that the transmission state of the Wi-Fi processor 1010 is not the continuous Tx state. For example, the TAS manager 701 in AP 510 may identify that the transmission state of the Wi-Fi processor 1010 is the discontinuous Tx state (e.g., discontinuous Tx available) or the no Tx state (e.g., Tx not possible). The discontinuous Tx state or the no Tx state may be a state in which a relatively low output power value is required.

In an embodiment, in operation 1007, the TAS manager 701 in AP 510 may reduce a target SAR value corresponding to the Wi-Fi processor 1010. The TAS manager 701 in AP 510 may reduce or increase second output power of the non-cellular communication module in association with the non-cellular wireless communication between the non-cellular wireless communication module and a second external electronic device, at least partially based on the first output power. The second external electronic device may include, e.g., an access point associated with short-range wireless communication. The TAS manager 701 in AP 510 may set the target SAR value corresponding to, e.g., the Wi-Fi processor 1010 to any one of a target SAR value (e.g., target SAR limit) corresponding to the high power mode, a target SAR value corresponding to the normal mode, or a target SAR value corresponding to the low power mode. In an embodiment, based on identifying that the transmission state of the Wi-Fi processor 1010 is the no Tx state or the discontinuous Tx state, the TAS manager 701 in AP 510 may set the target SAR value corresponding to the Wi-Fi processor 1010 to the target SAR value corresponding to the low power mode.

In an embodiment, in operation 1009, the TAS manager 701 in AP 510 may identify an average SAR value corresponding to the Wi-Fi processor 1010. In an embodiment, the Wi-Fi processor 1010 may provide an API associated with the current average SAR value. Based on identifying the average SAR value corresponding to the Wi-Fi processor 1010, the TAS manager 701 in AP 510 may identify whether it is possible to immediately increase the target SAR value corresponding to the communication processor 1020.

In an embodiment, in operation 1011, the TAS manager 701 in AP 510 may identify whether the identified average SAR value is less than the target SAR value reduced by operation 1007. The TAS manager 701 in AP 510 may perform the operation of reducing or increasing the second output power such that a sum of the first output power and the second output power does not a designated threshold during a designated time period. The TAS manager 701 in AP 510 may determine a threshold at least partially based on the TAS protocol for the cellular communication module. The TAS manager 701 in AP 510 may identify whether the average SAR value calculated based on the time window for the Wi-Fi processor 1020 is less than the reduced target SAR value according to the setting of the TAS manager. The TAS manager 701 in AP 510 may identify that the average SAR value is larger than the reduced target SAR value.

In an embodiment, based on identifying that the average SAR value is larger than the reduced target SAR value, the TAS manager 701 in AP 510 may set (or start) a timer having the size of the time period corresponding to the time window for the Wi-Fi processor 1010 in operation 1013. Based on starting the timer, the TAS manager 701 in AP 510 may identify whether the average SAR value corresponding to the Wi-Fi processor 1010 is less than or equal to the target SAR value corresponding to the low power mode in operation 1015, based on communication with the Wi-Fi processor 1010. In operation 1017, the TAS manager 701 in AP 510 may identify whether the average SAR value corresponding to the Wi-Fi processor 1010 is less than or equal to the target SAR value corresponding to the low power mode, or whether the timer has expired. Based on identifying that the average SAR value corresponding to the Wi-Fi processor 1010 exceeds the target SAR value corresponding to the low power mode and the time corresponding to the timer does not elapse, the TAS manager 701 in AP 510 may periodically identify whether the average SAR value corresponding to the Wi-Fi processor 1010 is less than or equal to the target SAR value corresponding to the low power mode.

In an embodiment, based on identifying that the average SAR value corresponding to the Wi-Fi processor 1010 is less than or equal to the target SAR value corresponding to the low power mode or that the timer has expired, the TAS manager 701 in AP 510 may increase the target SAR value corresponding to the communication processor 1020 in operation 1019. The TAS manager 701 in AP 510 may identify an SAR margin by reducing the target SAR value corresponding to the Wi-Fi processor 1010 in operation 1007. The TAS manager 701 in AP 510 may increase the target SAR value corresponding to the communication processor 1020 corresponding to the identified SAR margin, thereby enhancing transmission performance of the signal associated with communication supported by the communication processor 1020.

In an embodiment, the electronic device 101 may control the operations of a plurality of processors using a TAS manager 701 in AP 510 implemented as at least a portion of an AP, thereby performing a general-purpose combined TAS function even when a plurality of processors having different manufacturers are included in the electronic device 101.

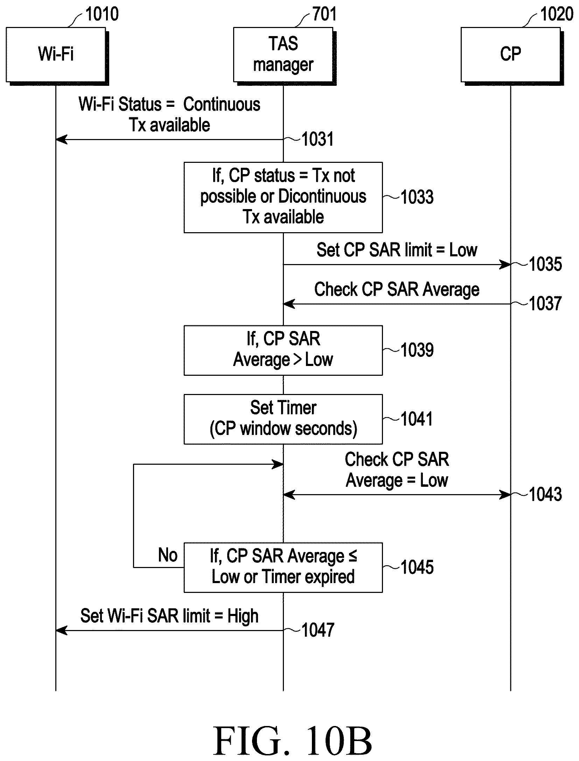

FIG. 10B is a flowchart illustrating an operation method of an electronic device according to an embodiment.

In an embodiment, the Wi-Fi processor 1010 may transmit data (or a flag) associated with the transmission state of the Wi-Fi processor 1010 to the TAS manager 701 in AP 510 in operation 1031. The Wi-Fi processor 1010 may transmit, e.g., data associated with the continuous Tx state to the TAS manager 701 in AP 510. The Wi-Fi processor 1010 may be, e.g., in a connected mode in which a connection with an access point is established. Based on receiving the data associated with the continuous Tx state from the Wi-Fi processor 1010, the TAS manager 701 in AP 510 may identify that it is required to change the operation mode to the Wi-Fi high power mode. The TAS manager 701 in AP 510 may identify that it is required to change the operation mode from the balance mode (or the default mode) to the Wi-Fi high power mode, based on requiring that the transmission operation be continuously performed by the Wi-Fi processor 1010.

In an embodiment, in operation 1033, the TAS manager 701 in AP 510 may identify whether the transmission state of the communication processor 1020 is the continuous Tx state (e.g., continuous Tx available), based on communication with the communication processor 1020. The TAS manager 701 in AP 510 may identify that the transmission state of the communication processor 1020 is not the continuous Tx state. For example, the TAS manager 701 in AP 510 may identify that the transmission state of the communication processor 1020 is the discontinuous Tx state (e.g., discontinuous Tx available) or the no Tx state (e.g., Tx not possible).

In an embodiment, in operation 1035, the TAS manager 701 in AP 510 may reduce a target SAR value corresponding to the communication processor 1020. For example, the target SAR value corresponding to the communication processor 1020 may be set to any one of a target SAR value (e.g., target SAR limit) corresponding to the high power mode, a target SAR value corresponding to the normal mode, or a target SAR value corresponding to the low power mode. In an embodiment, based on identifying that the transmission state of the communication processor 1020 is the no Tx state or the discontinuous Tx state, the TAS manager 701 in AP 510 may set the target SAR value corresponding to the communication processor 1020 to the target SAR value corresponding to the low power mode.

In an embodiment, in operation 1037, the TAS manager 701 in AP 510 may identify an average SAR value corresponding to the communication processor 1020. In an embodiment, the communication processor 1020 may provide an API associated with the current average SAR value. Based on identifying the average SAR value corresponding to the communication processor 1020, the TAS manager 701 in AP 510 may identify whether it is possible to immediately increase the target SAR value corresponding to the Wi-Fi processor 1010.

In an embodiment, in operation 1039, the TAS manager 701 in AP 510 may identify whether the identified average SAR value is less than the target SAR value reduced by operation 1035. The TAS manager 701 in AP 510 may identify whether the average SAR value calculated based on the time window for the communication processor 1020 is less than the reduced target SAR value according to the setting of the TAS manager. The TAS manager 701 in AP 510 may identify that the average SAR value is larger than the reduced target SAR value.

In an embodiment, based on identifying that the average SAR value is larger than the reduced target SAR value, the TAS manager 701 in AP 510 may set (or start) a timer having the size of the time period corresponding to the time window for the communication processor 1020 in operation 1041. Based on starting the timer, the TAS manager 701 in AP 510 may identify whether the average SAR value corresponding to the communication processor 1020 is less than or equal to the target SAR value corresponding to the low power mode in operation 1043, based on communication with the communication processor 1020. In operation 1045, the TAS manager 701 in AP 510 may identify whether the average SAR value corresponding to the communication processor 1020 is less than or equal to the target SAR value corresponding to the low power mode, or whether the timer has expired. Based on identifying that the average SAR value corresponding to the communication processor 1020 exceeds the target SAR value corresponding to the low power mode and the time corresponding to the timer does not elapse, the TAS manager 701 in AP 510 may periodically identify whether the average SAR value corresponding to the communication processor 1020 is less than or equal to the target SAR value corresponding to the low power mode.

In an embodiment, based on identifying that the average SAR value corresponding to the communication processor 1020 is less than or equal to the target SAR value corresponding to the low power mode or that the timer has expired, the TAS manager 701 in AP 510 may increase the target SAR value corresponding to the Wi-Fi processor 1010 in operation 1047. The TAS manager 701 in AP 510 may identify an SAR margin by reducing the target SAR value corresponding to the communication processor 1020 in operation 1035. The TAS manager 701 in AP 510 may increase the target SAR value corresponding to the Wi-Fi processor 1010 corresponding to the identified SAR margin, thereby enhancing transmission performance of the signal associated with communication supported by the Wi-Fi processor 1010.

In an embodiment, the electronic device 101 may control the operations of a plurality of processors using a TAS manager 701 in AP 510 implemented as at least a portion of an AP, thereby performing a general-purpose combined TAS function even when a plurality of processors having different manufacturers are included in the electronic device 101.

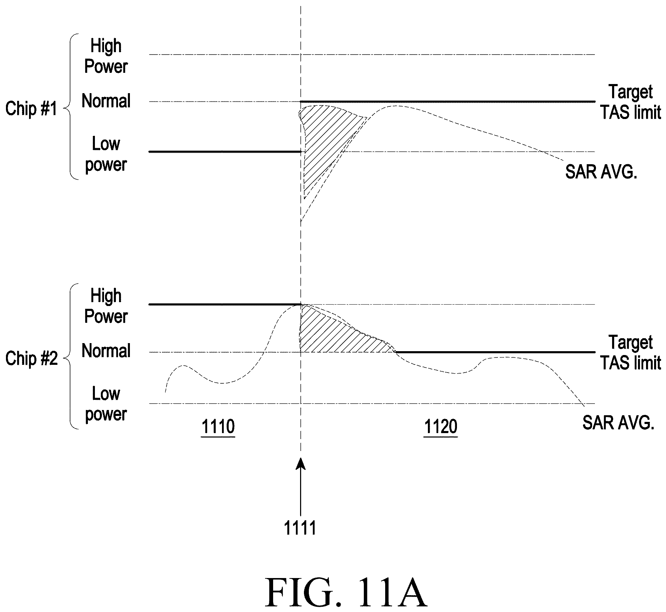

FIG. 11A is a view illustrating a change in operation mode for a plurality of processors of an electronic device according to a comparative example.

In a comparative example, referring to FIG. 11A, an electronic device (e.g., at least one of the processor 120 of FIG. 1, the application processor 510 of FIG. 5, or the application processor 510 of FIG. 7A) may adjust a target SAR value (e.g., a target SAR limit) corresponding to each of a plurality of processors. Referring to reference numeral 1110, the electronic device may operate in a second processor high power mode (chip#2 high power mode). The electronic device may adjust the target SAR value corresponding to the first processor and the target SAR value corresponding to the second processor based on identifying 1111 that the transmission state of the second processor is not the continuous Tx state.

In the comparative example, referring to reference numeral 1120, the electronic device may adjust the target SAR value corresponding to the first processor and the target SAR value corresponding to the second processor to the target SAR value corresponding to the normal mode without sequentially changing the target SAR values for the first processor (chip#1) and the second processor (chip#2). In the comparative example, the average SAR value during the time period corresponding to the time window for the second processor may be temporarily maintained to be larger than the target SAR value corresponding to the normal mode. While the average SAR value corresponding to the second processor is maintained to be larger than the target SAR value corresponding to the normal mode, the sum of the output power values by the first processor and the second processor may exceed the total threshold or may violate the SAR-related standard.

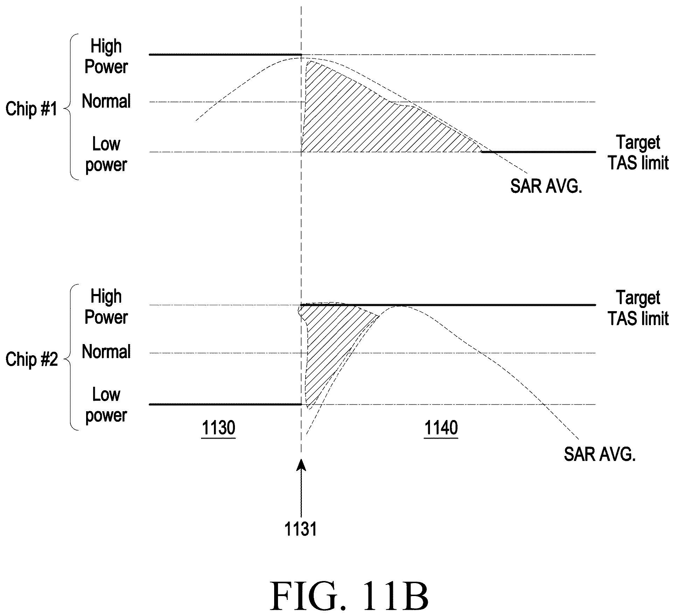

FIG. 11B is a view illustrating a change in operation mode for a plurality of processors of an electronic device according to a comparative example.

In a comparative example, referring to FIG. 11B, an electronic device (e.g., at least one of the processor 120 of FIG. 1, the application processor 510 of FIG. 5, or the application processor 510 of FIG. 7A) may adjust a target SAR value (e.g., a target SAR limit) corresponding to each of a plurality of processors. Referring to reference numeral 1130, the electronic device may operate in a first processor high power mode (chip#1 high power mode). The electronic device may adjust the target SAR value corresponding to the first processor and the target SAR value corresponding to the second processor based on identifying 1131 that the transmission state of the second processor is the continuous Tx state.

In the comparative example, referring to reference numeral 1140, the electronic device may change the operation mode from the first processor high power mode to the second processor high power mode (chip#2 high power mode) without sequentially changing the target SAR values for the first processor (chip#1) and the second processor (chip#2). In the comparative example, the average SAR value during the time period corresponding to the time window for the first processor may be temporarily maintained to be larger than the target SAR value corresponding to the low power mode. While the average SAR value corresponding to the first processor is maintained to be larger than the target SAR value corresponding to the low power mode, the sum of the output power values by the first processor and the second processor may exceed the total threshold or may violate the SAR-related standard.

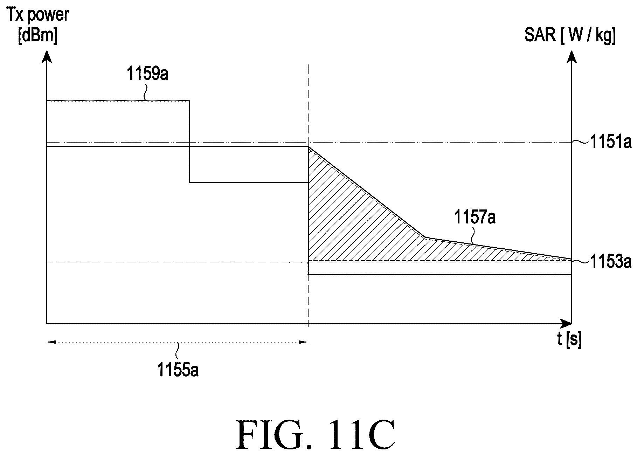

FIG. 11C is a view illustrating a change in operation mode for a processor of an electronic device according to an embodiment.

In an embodiment, the pattern in which the average SAR value 1157a decreases during the time period corresponding to the time window 1155a for the processor after the target SAR value corresponding to the processor decreases may be associated with the transmission power change pattern before the target SAR value is reduced. For example, the magnitude 1159a of the transmission power corresponding to the processor may be reduced immediately before the target SAR value is reduced. After the operation mode of the processor is changed from the default target SAR value 1151a to the reduced target SAR value 1153a, the average SAR value 1157a corresponding to the processor may rapidly decrease.

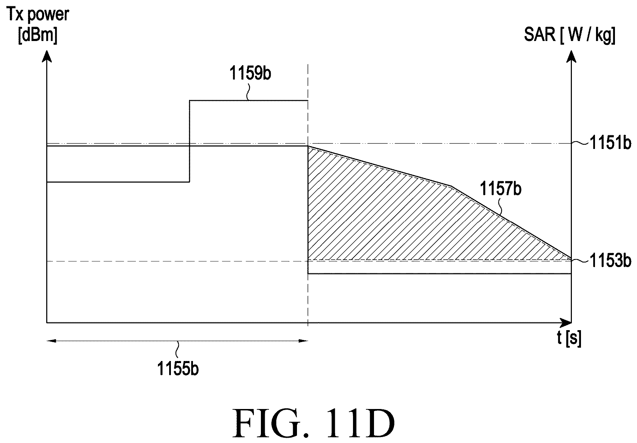

FIG. 11D is a view illustrating a change in operation mode for a processor of an electronic device according to an embodiment.

In an embodiment, the pattern in which the average SAR value 1157b decreases during the time period corresponding to the time window 1155b for the processor after the target SAR value corresponding to the processor decreases may be associated with the transmission power change pattern before the target SAR value is reduced. For example, the magnitude 1159b of the transmission power corresponding to the processor may be increased immediately before the target SAR value is reduced. After the operation mode of the processor is changed from the default target SAR value 1151b to the reduced target SAR value 1153b, the average SAR value 1157b corresponding to the processor may gradually decrease. As can be identified from FIGS. 11C and 11D, it may not be easy to predict the reduction pattern of the average SAR value corresponding to each of the plurality of processors. By changing the operation mode based on the transition period, the electronic device may reduce the risk that the sum of the average SAR values violates the SAR-related standard.

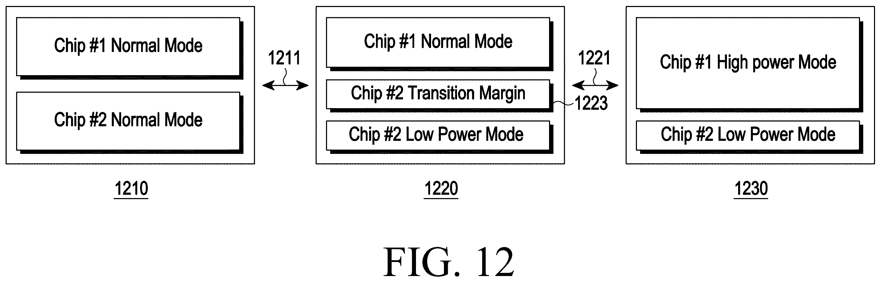

FIG. 12 is a view illustrating a change in operation mode for a plurality of processors of an electronic device according to an embodiment.

In an embodiment, referring to FIG. 12, the electronic device 101 may transition between a first processor high state 1230 (chip#1 high state) and a normal state 1210 via a transition state 1220. For example, the electronic device 101 may transition 1211 from the normal state 1210 to the transition state 1220 based on the reduction of the target SAR value corresponding to the second processor. The electronic device 101 may secure a transition margin 1223 by transitioning to the transition state. The electronic device 101 may remain in the transition state during a time period corresponding to the time window for the second processor or shorter. For example, after the target SAR value corresponding to the second processor is reduced to the target SAR value corresponding to the low state, the average SAR value calculated based on the time window for the second processor may be reduced along the time axis. The average SAR value may be reduced to less than the target SAR value corresponding to the low state before the time period corresponding to the time window elapses. After the average SAR value corresponding to the second processor decreases below the target SAR value corresponding to the low state, the electronic device 101 may transition 1221 from the transition state 1220 to the first processor high state 1230. In an embodiment, when the API associated with the current average SAR value is not provided by the second processor, the electronic device 101 may withhold the increase of the target SAR value corresponding to the first processor during the time period corresponding to the time window for the second processor. The electronic device 101 may control the first processor and the second processor such that the sum of the average SAR values corresponding to the first processor and the second processor meets the SAR-related regulation by withholding the increase of the target SAR value corresponding to the first processor based on the transition state 1220.

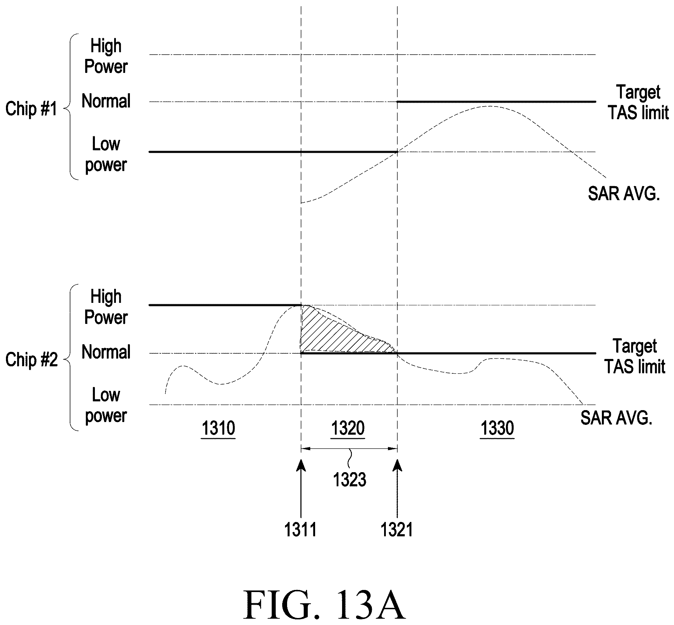

FIG. 13A is a view illustrating a change in operation mode for a processor of an electronic device according to an embodiment.

In an embodiment, the electronic device (e.g., at least one of the processor 120 of FIG. 1, the application processor 510 of FIG. 5, or the application processor 510 of FIG. 7A) may perform state transition based on the transition period 1320. In an embodiment, the electronic device may identify 1311 an event for triggering a transition from the second processor high state 1310 to the normal state 1330. For example, the event of triggering the transition of the electronic device from the second processor high state to the normal state may include a case where the transmission state of the second processor is the no Tx state or the discontinuous Tx state. After transitioning from the second processor high state 1310 to the transition period 1320, the electronic device may withhold the transition to the normal state 1330 during the time period 1323 corresponding to the time window for the second processor. The electronic device may transition to the normal state 1330 based on identifying 1321 that the average SAR value corresponding to the second processor is less than or equal to the target SAR value corresponding to the normal state. The time period 1323 corresponding to the time window for the second processor may be tens to hundreds of seconds depending on settings. When the electronic device fixes the period for which the increase in the target SAR value corresponding to the first processor is withheld as the time period 1323 corresponding to the time window, the increase in the output power value output by the first processor may be delayed even though the average SAR value by the first processor and the second processor meets the SAR-related regulation.

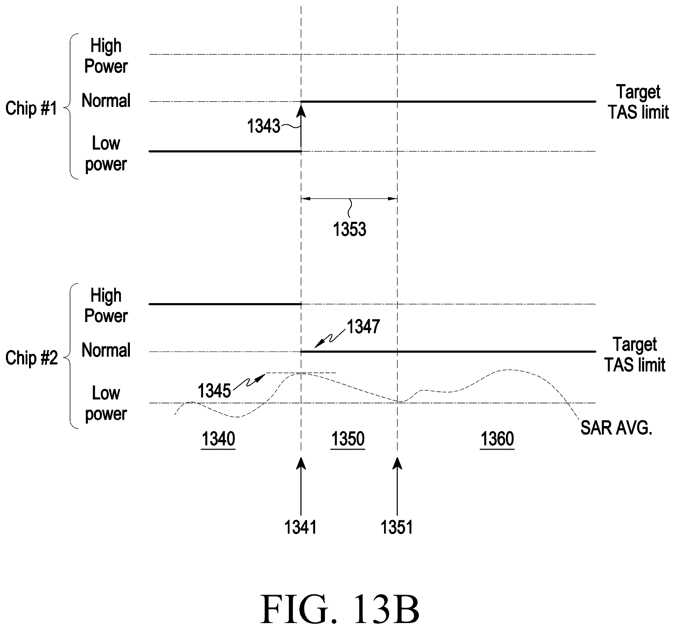

FIG. 13B is a view illustrating a change in operation mode for a processor of an electronic device according to an embodiment.

In an embodiment, the electronic device may immediately increase (1343) the target SAR value corresponding to the first processor, based on identifying (1341) an event causing a transition from the second processor high state 1340 to the normal state 1360 without transitioning to the transition period 1350. For example, the electronic device may identify whether the average SAR value 1345 corresponding to the second processor is less than or equal to the target SAR value 1347 corresponding to the normal state, based on identifying 1341 the event causing the transition from the second processor high state 1340 to the normal state 1360. Based on identifying that the average SAR value 1345 corresponding to the second processor is less than or equal to the target SAR value 1347 corresponding to the normal state, the electronic device may perform a state transition without waiting until the time 1351 at which the time period corresponding to the time window expires.

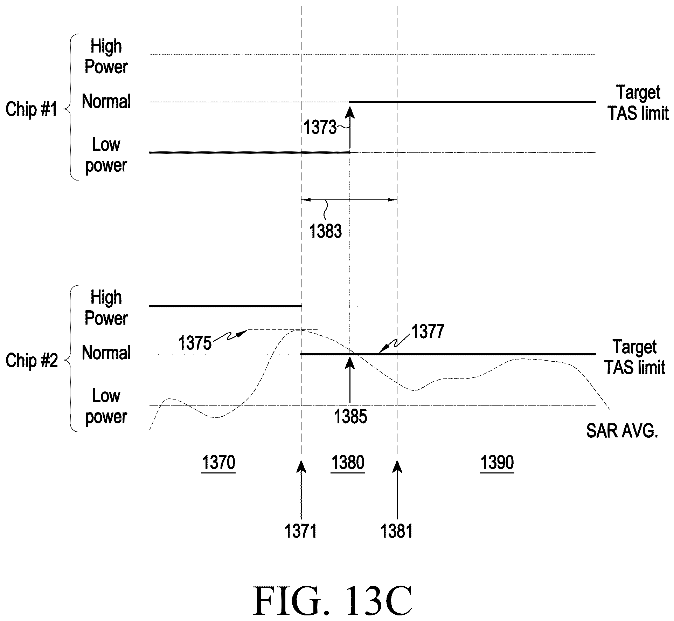

FIG. 13C is a view illustrating a change in operation mode for a processor of an electronic device according to an embodiment.

In an embodiment, after the transition to the transition period 1380, the electronic device may increase (1373) the target SAR value corresponding to the first processor without waiting for the time period 1383 corresponding to the time window for the second processor. The electronic device may identify 1371 an event causing a transition from the second processor high state 1370 to the normal state 1390. The electronic device 101 may identify the average SAR value 1375 corresponding to the second processor at the time of identifying the event. Based on identifying that the average SAR value 1375 corresponding to the second processor is larger than the target SAR value 1377 corresponding to the normal state, the electronic device may withhold the increase of the target SAR value corresponding to the first processor. The electronic device may increase 1373 the target SAR value corresponding to the first processor at a time 1385 when the average SAR value corresponding to the second processor is equal to or less than the target SAR value 1377 corresponding to the normal state. Based on identifying that the average SAR value corresponding to the second processor is less than or equal to the target SAR value 1377 corresponding to the normal state, the electronic device may perform a state transition without waiting until the time 1381 at which the time period corresponding to the time window expires.

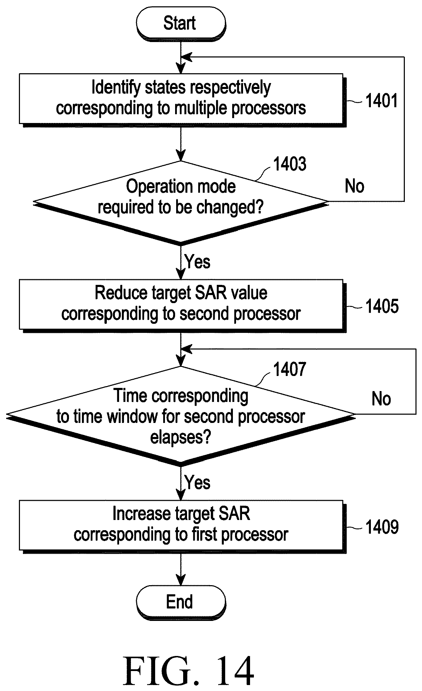

FIG. 14 is a flowchart illustrating an operation method of an electronic device according to an embodiment.

According to an embodiment, the electronic device 101 (e.g., at least one of the processor 120 of FIG. 1, the application processor 510 of FIG. 5, or the application processor 510 of FIG. 7A) may identify states respectively corresponding to the plurality of processors in operation 1401. The electronic device 101 may identify a transmission state corresponding to each of the plurality of processors included in the electronic device 101. In an embodiment, when the electronic device 101 controls to allow the sum of the output power values output by the two processors not to exceed the total threshold, the electronic device 101 may identify the transmission state of each of the first processor (e.g., the first processor 520 of FIG. 7A) and the second processor (e.g., the second processor 530 of FIG. 7A). The transmission state of the processor may be, e.g., any one of the no Tx state, the discontinuous Tx state, or the continuous Tx state. In an embodiment, when the electronic device 101 controls to allow the sum of the output power values output by the three processors not to exceed the total threshold, the electronic device 101 may identify the transmission state of each of the first processor, the second processor, and the third processor.

In an embodiment, in operation 1403, the electronic device 101 may identify whether it is necessary to change the operation mode. For example, based on identifying that the transmission state of the first processor is the continuous Tx state, the electronic device 101 may identify that the operation mode of the TAS manager (e.g., the TAS manager 701 of FIG. 7A) is required to be changed. For example, the TAS manager may identify that it is required to change the operation mode from a balance mode in which the output power value corresponding to the total SAR value for a designated time is relatively evenly distributed to each of the first processor and the second processor to a first processor high power mode in which a relatively higher output power value is distributed to the first processor. The electronic device 101 may identify that the target SAR value corresponding to each of the first processor and the second processor is required to be changed such that the first output power value output by the first processor for a designated time is larger than the second output power value output by the second processor for a designated time. In an embodiment, when the operation mode of the TAS manager determined by the transmission state corresponding to each of the plurality of processors is the same as the current operation mode, the electronic device 101 may identify that the operation mode is not required to be changed. In an embodiment, based on identifying that the operation mode is not required to be changed (No in operation 1403), the electronic device 101 may periodically identify states respectively corresponding to the plurality of processors.

In an embodiment, based on identifying that the operation mode is required to be changed (Yes in operation 1403), in operation 1405, the electronic device 101 may reduce the target SAR value corresponding to the second processor. For example, the target SAR value corresponding to the second processor may be set to any one of a target SAR value (e.g., target SAR limit) corresponding to the high power mode, a target SAR value corresponding to the normal mode, or a target SAR value corresponding to the low power mode. In an embodiment, based on identifying that the transmission state of the second processor is the no Tx state or the discontinuous Tx state, the electronic device 101 may reduce the target SAR value corresponding to the second processor from the target SAR value corresponding to the normal mode to the target SAR value corresponding to the low power mode.

In an embodiment, in operation 1407, the electronic device 101 may identify whether the time corresponding to the time window for the second processor has elapsed. In an embodiment, the second processor may not provide the API associated with the current average SAR value. To reduce the risk of violating the SAR-related standard, the electronic device 101 may withhold the increase of the target SAR value corresponding to the first processor until the time corresponding to the time window for the second processor elapses after the target SAR value corresponding to the second processor is reduced. Based on identifying that the time corresponding to the time window for the second processor does not elapse (No in operation 1407), the electronic device 101 may periodically identify whether the time corresponding to the time window for the second processor elapses from the time when the target SAR value corresponding to the second processor is reduced.

In an embodiment, based on identifying that the time corresponding to the time window for the second processor has elapsed (Yes in operation 1407), in operation 1409, the electronic device 101 may increase the target SAR value corresponding to the first processor. The electronic device 101 may identify the SAR margin by reducing the target SAR value corresponding to the second processor. The electronic device 101 may increase the target SAR value corresponding to the first processor corresponding to the identified SAR margin, thereby enhancing the transmission performance of communication supported by the first processor.

In an embodiment, the electronic device 101 may control the operations of a plurality of processors using a TAS manager implemented as at least a portion of an AP, thereby performing a general-purpose combined TAS function even when a plurality of processors having different manufacturers are included in the electronic device 101.

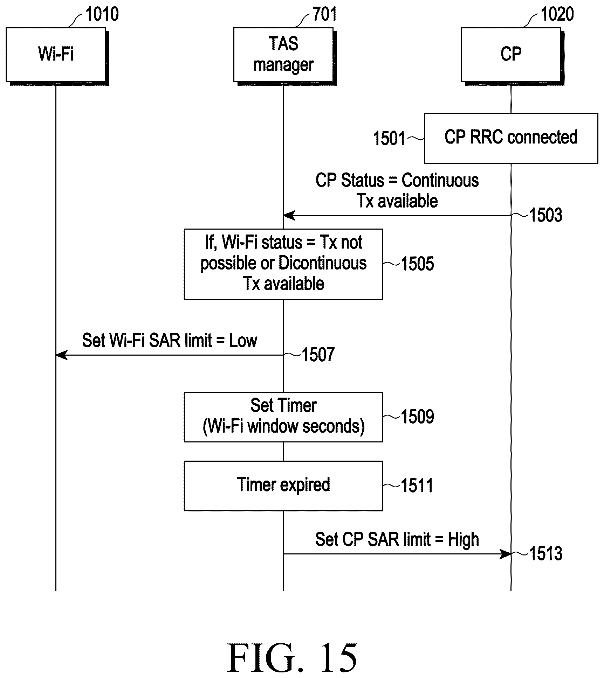

FIG. 15 is a flowchart illustrating an operation method of an electronic device according to an embodiment.

In an embodiment, the communication processor 1020 (e.g., at least one of the auxiliary processor 123 of FIG. 1, the first communication processor 212 or the second communication processor 214 of FIG. 2A, or the integrated communication processor 260 of FIG. 2B) may transition to the RRC connected state in operation 1501. The communication processor 1020 may transmit or receive a signal to or from the communication network via at least one antenna included in the electronic device (e.g., the electronic device 101 of FIG. 7A). The communication processor 1020 may be included in a cellular communication module. The cellular communication module may support a time-averaged SAR (TAS) protocol.

In an embodiment, based on performing an RRC connection procedure with the communication network, the communication processor 1020 may transmit data (or a flag) associated with the transmission state of the communication processor 1020 to the TAS manager 701 in AP 510 in operation 1503. The TAS manager 701 in AP 510 may be implemented as at least a portion of a processor disposed outside the cellular communication module and the non-cellular wireless communication module. The communication processor 1020 may transmit, e.g., data associated with the continuous Tx state to the TAS manager 701 in AP 510. The continuous Tx state may be, e.g., a state requiring a relatively high output power value. The TAS manager 701 in AP 510 may identify the first output power of the cellular communication module in association with cellular communication between the cellular communication module and the first external electronic device. Based on receiving the data associated with the continuous Tx state from the communication processor 1020, the TAS manager 701 in AP 510 may identify that it is required to change the limit value of the first output power corresponding to the cellular communication module. The TAS manager 701 in AP 510 may identify that it is required to change the operation mode to, e.g., a communication processor (CP) high power mode. The TAS manager 701 in AP 510 may identify that it is required to change the operation mode from the balance mode (or the default mode) to the communication processor high power mode, based on requiring that the transmission operation be continuously performed by the communication processor 1020.

In an embodiment, in operation 1505, the TAS manager 701 in AP 510 may identify whether the transmission state of the Wi-Fi processor 1010 is the continuous Tx state (e.g., continuous Tx available) based on communication with the Wi-Fi processor 1010. For example, the non-cellular wireless communication module may include a Wi-Fi communication module (or a Wi-Fi processor) that is not directly connected to the cellular communication module. The TAS manager 701 in AP 510 may reduce or increase second output power of the non-cellular communication module in association with the non-cellular wireless communication between the non-cellular wireless communication module and a second external electronic device, at least partially based on the first output power. The TAS manager 701 in AP 510 may identify that the transmission state of the Wi-Fi processor 1010 is not the continuous Tx state. For example, the TAS manager 701 in AP 510 may identify that the transmission state of the Wi-Fi processor 1010 is the discontinuous Tx state (e.g., discontinuous Tx available) or the no Tx state (e.g., Tx not possible). The discontinuous Tx state or the no Tx state may be a state in which a relatively low output power value is required.

In an embodiment, in operation 1507, the TAS manager 701 in AP 510 may reduce a target SAR value corresponding to the Wi-Fi processor 1010. The TAS manager 701 in AP 510 may reduce, e.g., the limit value of the second output power corresponding to the non-cellular communication module. For example, the target SAR value corresponding to the Wi-Fi processor 1010 may be set to any one of a target SAR value (e.g., target SAR limit) corresponding to the high power mode, a target SAR value corresponding to the normal mode, or a target SAR value corresponding to the low power mode. In an embodiment, based on identifying that the transmission state of the Wi-Fi processor 1010 is the no Tx state or the discontinuous Tx state, the TAS manager 701 in AP 510 may set the target SAR value corresponding to the Wi-Fi processor 1010 to the target SAR value corresponding to the low power mode. The TAS manager 701 in AP 510 may perform the operation of reducing or increasing the second output power such that a sum of the first output power and the second output power does not a designated threshold during a designated time period. The TAS manager 701 in AP 510 may determine the designated time period at least partially based on the TAS protocol for the cellular communication module. The designated time range may correspond to the time window associated with the cellular communication module. The TAS manager 701 in AP 510 may determine second output power at least partially based on the TAS protocol for the cellular communication module.

In an embodiment, the TAS manager 701 in AP 510 may set (or start) a timer having the size of the time period corresponding to the time window for the Wi-Fi processor 1010 in operation 1509. The TAS manager 701 in AP 510 may increase the limit value of the first output power corresponding to the cellular communication module after the designated time period in association with the non-cellular communication module elapses. In an embodiment, the Wi-Fi processor 1010 may not provide an API associated with the current average SAR value. After reducing the target SAR value corresponding to the Wi-Fi processor 1010, the electronic device 101 may withhold the increase of the target SAR value corresponding to the communication processor 1020 until the time corresponding to the time window for the Wi-Fi processor 1010 elapses. In operation 1511, the TAS manager 701 in AP 510 may identify that the time corresponding to the timer has elapsed.

In an embodiment, based on identifying that the timer has expired, the TAS manager 701 in AP 510 may increase the target SAR value corresponding to the communication processor 1020 in operation 1513. The TAS manager 701 in AP 510 may identify an SAR margin by reducing the target SAR value corresponding to the Wi-Fi processor 1010 in operation 1507. The TAS manager 701 in AP 510 may increase the target SAR value corresponding to the communication processor 1020 corresponding to the identified SAR margin, thereby enhancing transmission performance of the signal associated with communication supported by the communication processor 1020.

In an embodiment, the electronic device 101 may control the operations of a plurality of processors using a TAS manager 701 in AP 510 implemented as at least a portion of an AP, thereby performing a general-purpose combined TAS function even when a plurality of processors having different manufacturers are included in the electronic device 101.

According to an embodiment, a communication device (e.g., the electronic device 101 of FIG. 1) may comprise first communication circuitry configured to perform first wireless communication with a first external device based on a first communication protocol. The communication device may include second communication circuitry configured to perform second wireless communication with a second external device based on a second communication protocol. The communication device may include memory storing one or more computer programs. The communication device may comprise one or more application processors (e.g., at least one of the processor 120 of FIG. 1 or the application processor 510 of FIG. 5) communicatively connected to the first communication circuitry, the second communication circuitry and the memory. The one or more computer programs include computer-executable instructions that, when executed by the one or more application processors 120; 510, may cause the communication device to control the first communication circuitry and the second communication circuitry such that a sum of a first output power value output by the first communication circuitry during a designated time range and a second output power value output by the second communication circuitry during the designated time range does not exceed a preset total threshold.

In an embodiment, in case that at least one of the first communication circuitry or the second communication circuitry calculates an average of output power output by the first communication circuitry or the second communication circuitry during the designated time range, and controls not to exceed a first limit value or a second limit value which is an output limit value of the first communication circuitry or the second communication circuitry based on the calculated average of the output power, the first output power value or the second output power value may be the average.

In an embodiment, in case that at least one of the first communication circuitry or the second communication circuitry controls such that a maximum value of output power output by the first communication circuitry or the second communication circuitry within the designated time range does not exceed a first threshold or a second threshold that is an output limit value of the first communication circuitry or the second communication circuitry, the first output power value or the second output power value may be the maximum value.

In an embodiment, each of the first output power value and the second output power value may correspond to a plurality of preset different values corresponding to a change in output power corresponding to a context of the first communication circuitry or the second communication circuitry.

In an embodiment, the one or more computer programs further include computer-executable instructions that, when executed by the one or more application processors 120; 510, may cause the communication device to, at least part of controlling the first communication circuitry and the second communication circuitry such that the sum of the first output power value output by the first communication circuitry during the designated time range and the second output power value output by the second communication circuitry during the designated time range does not exceed the preset total threshold, and control the first communication circuitry and the second communication circuitry such that a sum of an accumulated first SAR value corresponding to the first communication circuitry during the designated time range and an accumulated second SAR value corresponding to the second communication circuitry during the designated time range does not exceed a preset total threshold.

In an embodiment, the plurality of preset different values corresponding to each of the first output power value and the second output power value may be set based on an output value margin between a sum of the first and second output power values and the preset total threshold.

In an embodiment, the communication device (i.e., electronic device 101) may further comprise a third communication circuitry. The one or more computer programs further include computer-executable instructions that, when executed by the one or more application processors 120; 510, may cause the electronic device to control the first communication circuitry to the third communication circuitry such that a sum of output power values of the first to third communication circuitry does not exceed the preset total threshold.

In an embodiment, the one or more computer programs further include computer-executable instructions that, when executed by the one or more application processors 120; 510, as at least part of controlling the first communication circuitry and the second communication circuitry such that the sum of the first output power value output by the first communication circuitry during the designated time range and the second output power value output by the second communication circuitry during the designated time range does not exceed the preset total threshold, may cause the communication device to control the first communication circuitry and the second communication circuitry such that the first output power value corresponds to a first value, and the second output power value corresponds to a second value. The one or more computer programs further include computer-executable instructions that, when executed by the one or more application processors 120; 510, may cause the communication device to receive first data associated with a state corresponding to the first communication circuitry from the first communication module and second data associated with a state corresponding to the second communication module from the second communication circuitry. The one or more computer programs further include computer-executable instructions that, when executed by the one or more application processors 120; 510, may cause the communication device to identify whether to change at least one of the first output power value or the second output power value, based on at least one of the first data or the second data.

In an embodiment, the one or more computer programs further include computer-executable instructions that, when executed by the one or more application processors 120; 510, as at least part of identifying whether to change at least one of the first output power value or the second output power value, based on at least one of the first data or the second data, may cause the electronic device to identify whether the state corresponding to the second communication circuitry is a state in which a relatively low output power value is required, based on identifying that the state corresponding to the first communication circuitry is a state in which a relatively high output power value is required. The one or more computer programs further include computer-executable instructions that, when executed by the one or more application processors 120; 510, may cause the electronic device to control the second communication circuitry such that a limit value of the second output power value corresponds to a fourth value smaller than the second value, based on identifying that the state corresponding to the second communication circuitry is the state in which the relatively low output power value is required. The one or more computer programs further include computer-executable instructions that, when executed by the one or more application processors 120; 510, may cause the electronic device to identify whether an average of the second output power value corresponding to a time period designated in association with the second communication circuitry is the fourth value or less. The one or more computer programs further include computer-executable instructions that, when executed by the one or more application processors 120; 510, may cause the electronic device to control the first communication circuitry such that a limit value of the first output power value corresponds to a third value larger than the first value before the time period designated in association with the second communication circuitry elapses from a time point at which the limit value of the second output power value is changed, based on identifying that the average of the second output power value is the fourth value or less.

In an embodiment, the first communication circuitry and the second communication circuitry may be further configured to transmit or receive a first RF signal based on the first communication protocol and a second RF signal based on the second communication protocol, through at least the same antenna.

According to an embodiment, a communication device (e.g., the electronic device 101 of FIG. 1) may comprise first communication circuitry performing communication with an external device in a first communication scheme; second communication circuitry performing communication with an external device in a second communication scheme, memory storing one or more computer programs, and one or more processors (e.g., the processor 120 of FIG. 1) communicatively connected to the first communication circuitry and the second communication circuitry to control output power of the first communication circuitry and the second communication circuitry. The one or more computer programs include computer-executable instructions that, when executed by the one or more processors 120, may cause the communication device to control the first communication circuitry and the second communication circuitry such that a sum of a first output power value output by the first communication circuitry during a designated time range and a second output power value output by the second communication circuitry during the designated time range does not exceed a preset total threshold. In case that at least one of the first communication circuitry or the second communication circuitry controls such that a maximum value of output power output by the first communication circuitry or the second communication circuitry within the designated time range does not exceed a first threshold or a second threshold that is an output limit value of the first communication circuitry or the second communication circuitry, the first output power value or the second output power value may be the maximum value.

In an embodiment, in case that at least one of the first communication circuitry or the second communication circuitry calculates an average of output power output by the first communication circuitry or the second communication circuitry during the designated time range, and controls not to exceed a first threshold or a second threshold which is an output limit value of the first communication circuitry or the second communication circuitry based on the calculated average of the output power, the first output power value or the second output power value may be the average.

In an embodiment, each of the first output power value and the second output power value may correspond to a plurality of preset different values corresponding to a change in output power corresponding to a context of the first communication circuitry and the second communication.

In an embodiment, the one or more computer programs further include computer-executable instructions that, when executed by the one or more processors 120, may cause the communication device to, as at least part of controlling the first communication circuitry and the second communication circuitry such that the sum of the first output power value output by the first communication circuitry during the designated time range and the second output power value output by the second communication circuitry during the designated time range does not exceed the preset total threshold, reduce the first output power value corresponding to the first communication circuitry and increase the second output power value corresponding to the second communication circuitry, based on a transition margin on a time axis.

According to an embodiment, a portable communication device (e.g., the electronic device 101 of FIG. 1) may comprise cellular communication circuitry (e.g., at least one of the first communication processor 212 or the second communication processor 214 of FIG. 2A, the integrated communication processor 260 of FIG. 2B, or the first processor 520 of FIG. 5), non-cellular wireless communication circuitry (e.g., the second processor 530 of FIG. 5), memory storing one or more computer programs, and one or more processors (e.g., at least one of the processor 120 of FIG. 1 or the application processor 510 of FIG. 5) disposed outside the cellular communication circuitry 212; 214; 260; 520 and the non-cellular wireless communication circuitry (i.e., the second processor 530) and communicatively coupled to the cellular communication circuitry, the non-cellular wireless communication circuitry, and the memory. The one or more computer programs include computer-executable instructions that, when executed by the one or more processors 120; 510, may cause the portable communication device to identify first output power of the cellular communication circuitry 212; 214; 260; 520 in association with cellular communication between the cellular communication circuitry 212; 214; 260; 520 and a first external electronic device. The one or more computer programs further include computer-executable instructions that, when executed by the one or more processors 120; 510, may cause the portable communication device to reduce or increase second output power of the non-cellular communication circuitry 530 in association with the non-cellular wireless communication between the non-cellular wireless communication circuitry (i.e., the second processor 530) and a second external electronic device, at least partially based on the first output power.

In an embodiment, the one or more computer programs further include computer-executable instructions that, when executed by the one or more processors 120; 510, may cause the portable communication device to perform the operation of reducing or increasing of the second output power such that a sum of the first output power and the second output power does not exceed a designated threshold during a designated time period.

In an embodiment, the cellular communication circuitry 212; 214; 260; 520 may support a time-averaged SAR (TAS) protocol. The one or more computer programs further include computer-executable instructions that, when executed by the one or more processors 120; 510, may cause the portable communication device to determine the designated time period at least partially based on the TAS protocol for the cellular communication circuitry 212; 214; 260; 520.

In an embodiment, the one or more computer programs further include computer-executable instructions that, when executed by the one or more processors, may cause the portable communication device to reduce a limit value of the second output power. The one or more computer programs further include computer-executable instructions that, when executed by the one or more processors, may cause the portable communication device to increase a limit value of the first output power after a time period designated in association with the non-cellular communication circuitry elapses.

In an embodiment, the cellular communication circuitry 212; 214; 260; 520 may support a TAS protocol. The one or more computer programs further include computer-executable instructions that, when executed by the one or more processors 120; 510, may cause the portable communication device to determine the threshold at least partially based on the TAS protocol for the cellular communication circuitry 212; 214; 260; 520.

In an embodiment, the cellular communication circuitry 212; 214; 260; 520 may support a TAS protocol. The one or more computer programs further include computer-executable instructions that, when executed by the one or more processors 120; 510, may cause the portable communication device to determine the second output power at least partially based on the TAS protocol for the cellular communication circuitry 212; 214; 260; 520.

In an embodiment, the non-cellular wireless communication circuitry (i.e., the second processor 530) may include a Wi-Fi communication circuitry not directly connected to the cellular communication circuitry 212; 214; 260; 520.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

**Claims**

1.  A communication device (101), comprising:

    first communication circuitry configured to perform first wireless communication with a first external device based on a first communication protocol;
    second communication circuitry configured to perform second wireless communication with a second external device based on a second communication protocol;
    memory storing one or more computer programs; and
    one or more application processors (120; 510) communicatively connected to the first communication circuitry, the second communication circuitry and the memory,
    wherein the one or more computer programs include computer-executable instructions that, when executed by the one or more application processors (120; 510), cause the communication device (101) to:
    control the first communication circuitry and the second communication circuitry such that a sum of a first output power value output by the first communication circuitry during a designated time range and a second output power value output by the second communication circuitry during the designated time range does not exceed a preset total threshold.

2.  The communication device (101) of claim 1,

    wherein in case that at least one of the first communication circuitry or the second communication circuitry calculates an average of output power output by the first communication circuitry or the second communication circuitry during the designated time range, and controls not to exceed a first limit value or a second limit value which is an output limit value of the first communication circuitry or the second communication circuitry based on the calculated average of the output power,
    the first output power value or the second output power value means the average.

3.  The communication device (101) of claim 1 or 2,

    wherein in case that at least one of the first communication circuitry or the second communication circuitry controls such that a maximum value of output power output by the first communication circuitry or the second communication circuitry within the designated time range does not exceed a first threshold or a second threshold that is an output limit value of the first communication circuitry or the second communication circuitry, the first output power value or the second output power value means the maximum value.

4. The communication device (101) of any one of claims 1 to 3, wherein each of the first output power value and the second output power value has a plurality of preset different values corresponding to a change in output power corresponding to a context of the first communication circuitry or the second communication circuitry.

5. The communication device (101) of any one of claims 1 to 4, wherein the one or more computer programs further include computer-executable instructions that, when executed by the one or more application processors (120; 510), cause the communication device (101) to, as at least part of controlling the first communication circuitry and the second communication circuitry such that the sum of the first output power value output by the first communication circuitry during the designated time range and the second output power value output by the second communication circuitry during the designated time range does not exceed the preset total threshold, control the first communication circuitry and the second communication circuitry such that a sum of an accumulated first specific absorption rate (SAR) value corresponding to the first communication circuitry during the designated time range and an accumulated second SAR value corresponding to the second communication circuitry during the designated time range does not exceed a preset total threshold.

6. The communication device (101) of any one of claims 1 to 5, wherein the plurality of preset different values corresponding to each of the first output power value and the second output power value are set based on an output value margin between a sum of the first and second output power values and the preset total threshold.

7. The communication device (101) of any one of claims 1 to 6, wherein the one or more computer programs further include computer-executable instructions that, when executed by the one or more application processors (120; 510), as at least part of controlling the first communication circuitry and the second communication circuitry such that the sum of the first output power value output by the first communication circuitry during the designated time range and the second output power value output by the second communication circuitry during the designated time range does not exceed the preset total threshold, cause the communication device (101) to control the first communication circuitry and the second communication circuitry such that the first output power value corresponds to a first value, and the second output power value corresponds to a second value, and wherein the instructions, when executed by the one or more application processors (120; 510), cause the communication device (101) to:

receive first data associated with a state corresponding to the first communication circuitry from the first communication circuitry and second data associated with a state corresponding to the second communication circuitry from the second communication circuitry, and identify whether to change at least one of the first output power value or the second output power value, based on at least one of the first data or the second data.

8. The communication device (101) of any one of claims 1 to 7, wherein the one or more computer programs further include computer-executable instructions that, when executed by the one or more application processors (120; 510), as at least part of identifying whether to change at least one of the first output power value or the second output power value, based on at least one of the first data or the second data, cause the communication device (101) to identify whether the state corresponding to the second communication circuitry is a state in which a relatively low output power value is required, based on identifying that the state corresponding to the first communication circuitry is a state in which a relatively high output power value is required, and wherein the one or more computer programs further include computer-executable instructions that, when executed by the one or more application processors (120; 510), cause the communication device (101) to:

control the second communication circuitry such that a limit value of the second output power value corresponds to a fourth value smaller than the second value, based on identifying that the state corresponding to the second communication circuitry is the state in which the relatively low output power value is required, identify whether an average of the second output power value corresponding to a time period designated in association with the second communication circuitry is the fourth value or less, and control the first communication circuitry such that a limit value of the first output power value corresponds to a third value larger than the first value before the time period designated in association with the second communication circuitry elapses from a time point at which the limit value of the second output power value is changed, based on identifying that the average of the second output power value is the fourth value or less.

9. The communication device (101) of any one of claims 1 to 8,
wherein the first communication circuitry and the second communication circuitry are further configured to transmit or receive a first RF signal based on the first communication protocol and a second RF signal based on the second communication protocol, through at least the same antenna.

10. A communication device (101), comprising:

first communication circuitry performing communication with an external device in a first communication scheme;
second communication circuitry performing communication with the external device in a second communication scheme;
memory storing one or more computer programs; and
one or more processors (120) communicatively connected to the first communication circuitry, the second communication circuitry and memory to control output power of the first communication circuitry and the second communication circuitry,
wherein the one or more computer programs include computer-executable instructions that, when executed by the one or more processors (120), cause the communication device (101) to control the first communication circuitry and the second communication circuitry such that a sum of a first output power value output by the first communication circuitry during a designated time range and a second output power value output by the second communication circuitry during the designated time range does not exceed a preset total threshold, and
wherein, in case that at least one of the first communication circuitry or the second communication circuitry controls such that a maximum value of output power output by the first communication circuitry or the second communication circuitry within the designated time range does not exceed a first threshold or a second threshold that is an output limit value of the first communication circuitry or the second communication circuitry,
the first output power value or the second output power value means the maximum value.

11. The communication device (101) of any one of claims 10,
wherein the one or more computer programs further include computer-executable instructions that, when executed by the one or more processors (120), cause the communication device (101) to, as at least part of controlling the first communication circuitry and the second communication circuitry such that the sum of the first output power value output by the first communication circuitry during the designated time range and the second output power value output by the second communication circuitry during the designated time range does not exceed the preset total threshold:

reduce the first output power value corresponding to the first communication circuitry, and
increase the second output power value corresponding to the second communication circuitry, based on a transition margin on a time axis.

12. A portable communication device (101), comprising:

cellular communication circuitry (212; 214; 260; 520);
non-cellular wireless communication circuitry (530); memory storing one or more computer programs; and
one or more processors (120; 510) disposed outside the cellular communication circuitry (212; 214; 260; 520) and the non-cellular wireless communication circuitry (530) and communicatively coupled to the cellular communication circuitry, the non-cellular wireless communication circuitry, and the memory, wherein the one or more computer programs include computer-executable instructions that, when executed by the one or more processors (120; 510), cause the portable communication device (101) to:

identify first output power of the cellular communication circuitry (212; 214; 260; 520) in association with cellular communication between the cellular communication circuitry (212; 214; 260; 520) and a first external electronic device; and
reduce or increase second output power of the non-cellular communication circuitry (530) in association with the non-cellular wireless communication between the non-cellular wireless communication circuitry (530) and a second external electronic device, at least partially based on the first output power.

13. The portable communication device (101) of claim 12,

wherein the one or more computer programs further include computer-executable instructions that, when executed by the one or more processors (120; 510), cause the portable communication device (101) to, perform the reducing or increasing of the second output power such that a sum of the first output power and the second output power does not exceed a designated threshold during a designated time period.

14. The portable communication device (101) of claim 12 or 13,
wherein the cellular communication circuitry(212; 214; 260; 520) supports a time-averaged SAR (TAS) protocol, and wherein the one or more computer programs further include computer-executable instructions that, when executed by the one or more processors (120; 510), cause the portable communication device (101) to:
determine the designated time period at least partially based on the TAS protocol for the cellular communication circuitry (212; 214; 260; 520).

15. The portable communication device (101) of any one of claims 12 to 14,
wherein the cellular communication circuitry(212; 214; 260; 520) supports a time-averaged SAR (TAS) protocol, and wherein the one or more computer programs further include computer-executable instructions that, when executed by the one or more processors (120; 510), cause the portable communication device (101) to:
determine the second output power at least partially based on the TAS protocol for the cellular communication circuitry (212; 214; 260; 520).

FIG. 1

EP 4 654 485 A1

**200**

**ELECTRONIC DEVICE** — 101

**WIRELESS COMMUNICATION MODULE** — 192

**FIRST COMMUNICATION PROCESSOR** — 212

**FIRST RFIC** — 222

**FIRST RFFE** — 232

**PROCESSOR** — 120

213

**MEMORY** — 130

**SECOND COMMUNICATION PROCESSOR** — 214

**SECOND RFIC** — 224

**SECOND RFFE** — 234

**FOURTH RFIC** — 228

**FIRST ANTENNA MODULE** — 242

**SECOND ANTENNA MODULE** — 244

**THIRD ANTENNA MODULE** — 246

**THIRD RFIC** — 226

**THIRD RFFE** — 236

**PHASE SHIFTER** — 238

248

**SECOND NETWORK** — 199

**FIRST CELLULAR NETWORK (E.G., LEGACY NETWORK)** — 292

**SECOND CELLULAR NETWORK (E.G., 5G NETWORK)** — 294

**FIG. 2A**

FIG. 2B

Start

Invoke multiple tables for transmission power corresponding to multiple times — 301

Identify past accumulated SAR value and expected SAR values at current time and future time for multiple tables — 303

305
Table in which sum of accumulated SAR value and expected SAR value exceeds threshold accumulated value is present?

No → Transmit communication signal with set transmission power — 309

Yes

Back off transmission power of at least part of communication signal — 307

End

FIG. 3A

FIG. 3B

FIG. 4A

EP 4 654 485 A1

FIG. 4B

FIG. 4C

| | 461 | 462 | 463 | |
|---|---|---|---|---|
| | Past | Present | Future | |
| k th table | D1 | D2 | D3 | → D1+D2+D3 > Th ? |

**460**

FIG. 4D

481   482   483                        480

| | Past | Present | Future |
|---|---|---|---|
| k+1 th table | D4 | D2 | D5 |

→ D4+D2+D5 > Th ?

FIG. 4E

FIG. 5

FIG. 6A

SAR

Chip #2 used · Chip #2 used · Chip #2 used · Unused · Chip #2 used · Chip #2 used

Chip #1 used · Chip #1 used · Unused · Chip #1 used

640 · 641 · 631

$t_1 - L*T$ ... $t_1 - 5T$ $t_1 - 4T$ $t_1 - 3T$ $t_1 - 2T$ $t_1 - T$ $T$ $t_1$ $T$ $t_1 + T$ t [s]

Chip #1 SAR budget

Unused · Chip #1 used · Chip #1 used

651 · 653

$t_1 - T$ $t_1$ $t_1 + T$ t [s]

Chip #2 SAR budget

Unused · Chip #2 used · Chip #2 used

661 · 663

$t_1 - T$ $t_1$ $t_1 + T$ t [s]

FIG. 6B

~101

| AP | ~510 |
| TAS manager | ~701 |
| RIL | |

511~

| Second processor | ~530 |
| TAS module | ~703 |

515

513

| First processor | ~520 |
| TAS module | ~523 |

# FIG. 7A

FIG. 7B

FIG. 7C

FIG. 7D

FIG. 8A

FIG. 8B

EP 4 654 485 A1

EP 4 654 485 A1

SAR

870

841

Unused | | Unused | Unused | 840
871

873

Chip #1 used | Chip #1 used | | Chip #1 used | Chip #1 used

831

Chip #1 used

$t_1-L*T$ ... $t_1-5T$ | $t_1-4T$ | $t_1-3T$ | $t_1-2T$ | $t_1-T$ | T | $t_1$ | T | $t_1+T$

t [s]

SAR

880

861

851

860

883

Unused | Unused | Unused
881

$t_1-L*T$ ... $t_1-5T$ | $t_1-4T$ | $t_1-3T$ | $t_1-2T$ | $t_1-T$ | T | $t_1$ | T | $t_1+T$

t [s]

FIG. 8C

FIG. 9

FIG. 10A

FIG. 10B

FIG. 11A

FIG. 11B

FIG. 11C

FIG. 11D

FIG. 12

FIG. 13A

FIG. 13B

FIG. 13C

FIG. 14

FIG. 15

## INTERNATIONAL SEARCH REPORT

| International application No. |
|---|
| **PCT/KR2024/008564** |

| A. | CLASSIFICATION OF SUBJECT MATTER |
|---|---|

**H04B 1/3827**(2015.01)i; **H04W 52/22**(2009.01)i; **H04W 52/28**(2009.01)i; **H04W 52/34**(2009.01)i; **H04W 88/06**(2009.01)i

According to International Patent Classification (IPC) or to both national classification and IPC

| B. | FIELDS SEARCHED |
|---|---|

Minimum documentation searched (classification system followed by classification symbols)

H04B 1/3827(2015.01); G05F 3/02(2006.01); H04B 17/10(2015.01); H04B 17/11(2015.01); H04W 52/22(2009.01); H04W 52/28(2009.01); H04W 52/36(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: SAR(specific absorption rate), 출력 전력 값(output power value), 감소 (reduction), 프로토콜(protocol)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2021-0020462 A (SAMSUNG ELECTRONICS CO., LTD.) 24 February 2021 (2021-02-24) See paragraphs [0037]-[0038], [0061] and [0122]; claim 1; and figures 2a and 5. | 1-6,9-15 |
| A | | 7-8 |
| Y | KR 10-2465059 B1 (SAMSUNG ELECTRONICS CO., LTD.) 09 November 2022 (2022-11-09) See paragraphs [0107]-[0108]; claim 5; and figures 1, 3 and 7. | 1-6,9-15 |
| A | EP 3975629 A1 (INTEL CORPORATION) 30 March 2022 (2022-03-30) See paragraphs [0040]-[0041]; claim 1; and figure 4. | 1-15 |
| A | KR 10-2023-0066349 A (QUALCOMM INCORPORATED) 15 May 2023 (2023-05-15) See paragraphs [0086]-[0092]; claim 1; and figure 4. | 1-15 |
| A | US 2016-0098053 A1 (MICROSOFT CORPORATION) 07 April 2016 (2016-04-07) See paragraphs [0009]-[0020]; claim 1; and figure 1. | 1-15 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **20 September 2024** | **20 September 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/008564**

| Patent document cited in search report | | | Publication date (day/month/year) | Patent family member(s) | | | Publication date (day/month/year) |
|---|---|---|---|---|---|---|---|
| KR | 10-2021-0020462 | A | 24 February 2021 | BR | 112022002512 | A2 | 03 May 2022 |
| | | | | CN | 112399535 | A | 23 February 2021 |
| | | | | CN | 112399535 | B | 01 March 2024 |
| | | | | CN | 118042565 | A | 14 May 2024 |
| | | | | EP | 3780400 | A1 | 17 February 2021 |
| | | | | KR | 10-2650993 | B1 | 26 March 2024 |
| | | | | US | 11228985 | B2 | 18 January 2022 |
| | | | | US | 11785556 | B2 | 10 October 2023 |
| | | | | US | 11917552 | B2 | 27 February 2024 |
| | | | | US | 2021-0051601 | A1 | 18 February 2021 |
| | | | | US | 2022-0132438 | A1 | 28 April 2022 |
| | | | | US | 2022-0159584 | A1 | 19 May 2022 |
| | | | | US | 2024-0089867 | A1 | 14 March 2024 |
| | | | | WO | 2021-029692 | A1 | 18 February 2021 |
| | | | | ZA | 202202736 | B | 20 December 2023 |
| KR | 10-2465059 | B1 | 09 November 2022 | CN | 109688620 | A | 26 April 2019 |
| | | | | CN | 109688620 | B | 01 December 2023 |
| | | | | EP | 3474609 | A1 | 24 April 2019 |
| | | | | EP | 3474609 | B1 | 24 March 2021 |
| | | | | KR | 10-2019-0043916 | A | 29 April 2019 |
| | | | | US | 10652839 | B2 | 12 May 2020 |
| | | | | US | 11071067 | B2 | 20 July 2021 |
| | | | | US | 2019-0124605 | A1 | 25 April 2019 |
| | | | | US | 2020-0275387 | A1 | 27 August 2020 |
| EP | 3975629 | A1 | 30 March 2022 | EP | 3975629 | B1 | 22 May 2024 |
| | | | | US | 12069581 | B2 | 20 August 2024 |
| | | | | US | 2022-0095237 | A1 | 24 March 2022 |
| KR | 10-2023-0066349 | A | 15 May 2023 | BR | 112023003862 | A2 | 04 April 2023 |
| | | | | CN | 116058016 | A | 02 May 2023 |
| | | | | EP | 4211944 | A1 | 19 July 2023 |
| | | | | JP | 2023-541579 | A | 03 October 2023 |
| | | | | TW | 202211705 | A | 16 March 2022 |
| | | | | US | 11716695 | B2 | 01 August 2023 |
| | | | | US | 2022-0086770 | A1 | 17 March 2022 |
| | | | | US | 2023-0345381 | A1 | 26 October 2023 |
| | | | | WO | 2022-055639 | A1 | 17 March 2022 |
| US | 2016-0098053 | A1 | 07 April 2016 | CN | 106796439 | A | 31 May 2017 |
| | | | | CN | 106796439 | B | 19 February 2019 |
| | | | | EP | 3202194 | A1 | 09 August 2017 |
| | | | | EP | 3202194 | B1 | 04 July 2018 |
| | | | | TW | 201615048 | A | 16 April 2016 |
| | | | | US | 9785174 | B2 | 10 October 2017 |
| | | | | WO | 2016-053930 | A1 | 07 April 2016 |

Form PCT/ISA/210 (patent family annex) (July 2022)